(19) Europäisches Patentamt / European Patent Office / Office européen des brevets

(11) **EP 3 315 994 B1**

(12) **FASCICULE DE BREVET EUROPEEN**

(45) Date de publication et mention de la délivrance du brevet:
**10.03.2021 Bulletin 2021/10**

(51) Int Cl.:
*G01S 13/34* *(2006.01)*        *G01S 13/44* *(2006.01)*
*G01S 13/93* *(2020.01)*        *G01S 13/02* *(2006.01)*

(21) Numéro de dépôt: **17197668.1**

(22) Date de dépôt: **23.10.2017**

(54) **RADAR FMCW MULTIFAISCEAUX, NOTAMMENT POUR AUTOMOBILE**

MEHRSTRAHLIGER FMCW-RADAR, INSBESONDERE FÜR KRAFTFAHRZEUG

MULTIBEAM FMCW RADAR, IN PARTICULAR FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.10.2016 FR 1601552**

(43) Date de publication de la demande:
**02.05.2018 Bulletin 2018/18**

(73) Titulaire: **Thales**
**92400 Courbevoie (FR)**

(72) Inventeurs:
• **CORNIC, Pascal**
**29820 GUILERS (FR)**
• **KEMKEMIAN, Stéphane**
**75014 PARIS (FR)**
• **AUDIC, Yves**
**29280 PLOUZANE (FR)**

(74) Mandataire: **Marks & Clerk France**
**Immeuble "Visium"**
**22, avenue Aristide Briand**
**94117 Arcueil Cedex (FR)**

(56) Documents cités:
EP-A1- 1 533 866      EP-A1- 2 312 335
FR-A1- 2 987 683

• ROCCA P ET AL: "Low sidelobe ADS-based arrays for FMCW radar", ANTENNAS AND PROPAGATION (APSURSI), 2011 IEEE INTERNATIONAL SYMPOSIUM ON, IEEE, 3 juillet 2011 (2011-07-03), pages 2004-2007, XP032191607, DOI: 10.1109/APS.2011.5996899 ISBN: 978-1-4244-9562-7
• SLOMIAN IZABELA ET AL: "Multi-beam and multi-range antenna array for 24 GHz radar applications", 2014 20TH INTERNATIONAL CONFERENCE ON MICROWAVES, RADAR AND WIRELESS COMMUNICATIONS (MIKON), WARSAW UNIVERSITY OF TECHNOLOGY (WUT), 16 juin 2014 (2014-06-16), pages 1-4, XP032643583, DOI: 10.1109/MIKON.2014.6899867 ISBN: 978-617-607-553-0 [extrait le 2014-09-16]
• Martin Schneider: "Automotive Radar - Status and Trends", Proceedings of the GeMiC 2005, 5 avril 2005 (2005-04-05), pages 144-147, XP055229145, Ulm, Germany Extrait de l'Internet: URL:http://citeseerx.ist.psu.edu/viewdoc/d ownload?doi=10.1.1.329.3571&rep=rep1&type= pdf [extrait le 2015-11-18]
• MATTHIAS STEINHAUER ET AL: "Millimeter-Wave-Radar Sensor Based on a Transceiver Array for Automotive Applications", IEEE TRANSACTIONS ON MICROWAVE THEORY AND TECHNIQUES, IEEE SERVICE CENTER, PISCATAWAY, NJ, US, vol. 56, no. 2, 1 février 2008 (2008-02-01), pages 261-269, XP011200080, ISSN: 0018-9480, DOI: 10.1109/TMTT.2007.914635

**Description**

La présente invention concerne un radar FMCW multifaisceaux. Elle s'applique notamment dans le domaine des radars pour véhicules automobiles. Plus généralement elle peut s'appliquer aux radars à onde continue modulée en fréquence, dit FMCW.

Les radars pour automobiles ont été introduits pour des fonctions d'aide à la conduite, plutôt orientées vers le confort, comme par exemple l'adaptation à la vitesse de croisière pour l'utilisation sur autoroute, dite fonction ACC (Adaptative Cruise Control), ou le « Stop and Go » en conduite urbaine. Ils utilisent les ondes millimétriques, en particulier la bande 76-81 GHz.

Grâce à l'évolution des technologies, les applications actuelles visent également des fonctions de sécurité de type anticollision, et il est même envisagé à relativement court terme d'aboutir au véhicule entièrement autonome, la perception de l'environnement étant assurée par l'association d'un certain nombre de capteurs, reposant sur différentes technologies : radar, vidéo, infrarouge notamment

En raison de ses capacités tout-temps, le radar reste dans ce cadre un capteur prépondérant et ses capacités de détection et de discrimination doivent être étendues pour garantir la fiabilité globale du système. En ce qui concerne l'anticollision, le capteur radar doit en particulier être capable de distinguer parmi les objets fixes qu'il détecte, ceux qui correspondent à des éléments d'infrastructure routière, de ceux qui correspondent à des véhicules immobilisés sur la voie qui constituent potentiellement un risque de collision. Dans ce contexte, il est notamment fondamental qu'il ne génère pas de fausses alarmes pouvant entrainer un freinage ou une manœuvre d'évitement d'urgence, sans cause réelle, en particulier lorsque le véhicule se déplace à grande vitesse. Cela impose une sensibilité et des capacités de discrimination accrues permettant d'appréhender la situation à l'avant du véhicule à grande distance, typiquement supérieure à 200 m. Il peut être également nécessaire de détecter les bords des routes.

Dans ce contexte, la sensibilité de détection ainsi que la résolution et la capacité de localisation angulaires dans le plan horizontal et dans le plan vertical doivent être optimisées simultanément, alors que les dimensions de l'antenne sont particulièrement contraintes.

Un problème technique à résoudre est notamment d'obtenir une sensibilité et des capacités de discrimination angulaires suffisantes, tout en conservant une architecture d'antenne simple et en limitant le volume de traitement.

A ce jour, ce problème n'est pas résolu. D'un point de vue purement technique, une solution idéale consisterait pour une surface d'antenne contrainte, à disposer des éléments rayonnants ou des sous-réseaux d'éléments rayonnants sur l'ensemble de la surface disponible, ces éléments rayonnants ou sous-réseaux étant alimentés de façon individuelle par des modules actifs d'émission et de réception. Cette solution permettrait d'optimiser les diagrammes de rayonnement par rapport à la résolution angulaire, tout en maitrisant le niveau des lobes secondaires de ces diagrammes en émission et en réception simultanément. Malheureusement, elle n'est pas accessible dans le cadre d'une application en ondes millimétriques destinée notamment à l'automobile, pour des raisons de technologie et de coût.

C'est pourquoi des solutions plus simples et moins performantes sont actuellement mises en œuvre.

Les radars utilisent des antennes réseaux comprenant éventuellement plusieurs voies d'émission et plusieurs voies de réception, et réalisent par calcul numérique la formation de plusieurs faisceaux en réception. Dans ce cas, l'émission est effectuée sur un ou plusieurs réseaux antennaires réalisant un faisceau relativement large, typiquement de plus de 20° dans le plan horizontal et de 10° dans le plan vertical, et la réception s'effectue simultanément ou séquentiellement sur plusieurs sous réseaux couvrant ce même domaine angulaire.

Cette technique permet de localiser les différentes cibles dans le plan horizontal, voire dans le plan horizontal et dans le plan vertical, en comparant les signaux reçus sur les différents faisceaux.

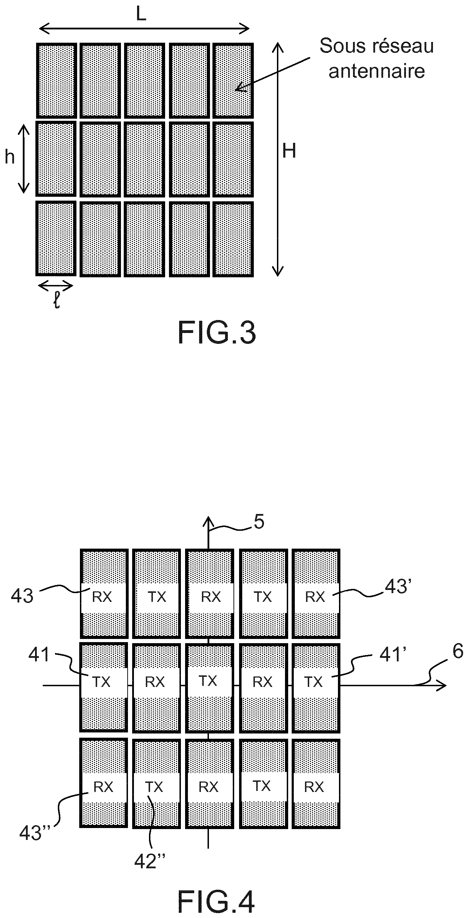

Dans certains cas, différents sous réseaux d'antennes sont commutés dans le temps en mode émission et en mode réception de façon à générer une diversité de diagramme de rayonnement dans l'objectif de mesurer l'azimut et l'élévation des cibles ou d'accroitre la résolution angulaire. Un tel principe est décrit par exemple figure 3 ou figure 4 de la publication « Automotive Radar - Status and Trends » de Martin Schneider (Proceeding the German Microwave Conférence GeMIC 2005). Cette commutation s'effectue au détriment du rendement de la forme d'onde du radar, qui se trouve divisé par le nombre de commutations. Par ailleurs, la présence de commutateurs dans la chaine hyper fréquence entraine des pertes qui dégradent la sensibilité du radar, et nécessite d'augmenter la bande de fréquence de réception du radar, ce qui est également de nature à dégrader la sensibilité par l'augmentation de la puissance de bruit captée par le récepteur.

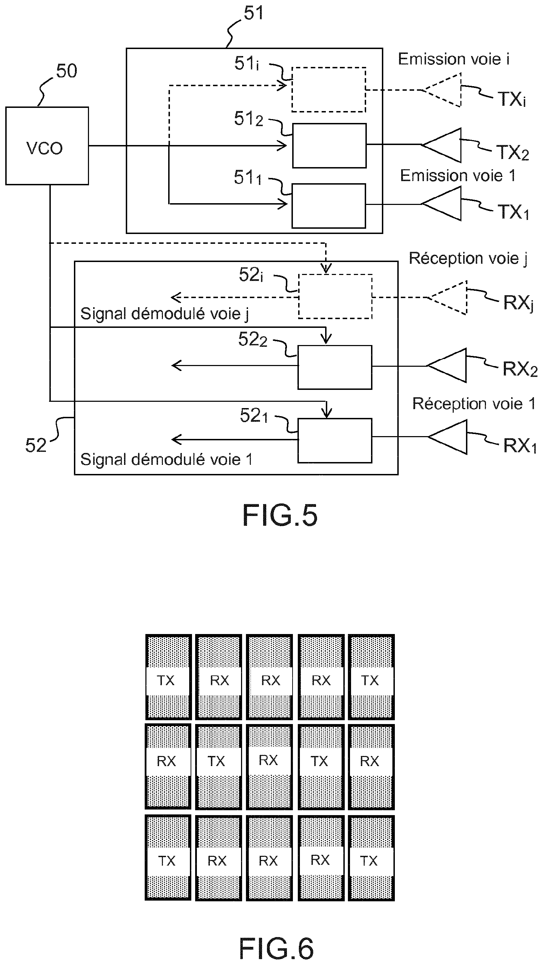

Dans d'autres cas, l'émission s'effectue par un sous réseau antennaire d'émission et la réception s'effectue simultanément sur plusieurs autres sous réseaux antennaires de réception. Cette solution nécessite de distribuer l'oscillateur de référence à 76 GHz sur l'ensemble des voies de réception pour effectuer la démodulation synchrone des signaux reçus, ce qui ne peut être envisagé que sur un faible nombre de voies, compte tenu des difficultés technologiques. Un tel principe est décrit par exemple figure 5 de la publication « Automotive Radar - Status and Trends » de Martin Schneider précitée. La complexité est encore accrue dès lors que la formation de faisceau doit s'effectuer en azimut et en élévation.

Dans certains cas, les mêmes sous réseaux sont utilisés simultanément en émission et en réception, comme par exemple décrit dans l'article « Millimeter-wave Radar Sensor Based on a Tranceiver Array for Automotive Applications » de Matthias Steinhauer et al, IEEE Transactions on Microwaves Theory and Techniques (vol. 56, Issue 2, Fev. 2008). Dans une telle solution le couplage émission réception est très important, et la sensibilité du radar est fortement dégradée par la fuite du bruit porté par l'émission dans les différents récepteurs. Par ailleurs, si plusieurs sous réseaux d'émission sont activés simultanément, il est nécessaire d'émettre des ondes orthogonales sur ces différents sous réseaux, ce qui est rapidement complexe si le nombre de voies est important. De la même façon en réception, pour que le traitement reste simple et robuste, il est nécessaire de ne traiter pour un sous réseau donné que le signal émis par ce même sous réseau. Le bilan de portée global se trouve ainsi fortement dégradé.

Un document ROCCA P et al : « Low sidelobes ADS-based arrays for FMCW radar », ANTENNAS AND PROPAGATION (APSURSI), 2011 IEEEE INTERNATIONAL SYMPOSIUM ON, IEEE, 3 juillet 2011, pages 2004-2007 décrit un radar FMCW comportant une antenne réseau composée de sous-réseaux d'émission et de sous-réseaux de réception.

Un but de l'invention est notamment de pallier les inconvénients précités et de permettre l'obtention d'une sensibilité et de capacités de discriminations angulaires suffisantes, tout en conservant une architecture d'antenne simple et en limitant le volume de traitements. A cet effet, l'invention a pour objet un radar à onde continue et à modulation de fréquence selon des rampes de fréquence, dite FMCW, comportant au moins une antenne réseau composée de sous-réseaux d'émission et de sous-réseaux de réception, un système d'émission et de réception et des moyens de traitement, dans lequel, une formation de faisceaux monopulse deux plans en émission et en réception étant réalisée en divisant ladite antenne en quatre quadrants à l'émission et à la réception, ladite formation de faisceaux monopulse en émission étant obtenue par un double codage en fréquence et en phase:

- la répartition des sous-réseaux d'émission et des sous-réseaux de réception est symétrique à la fois par rapport à un axe vertical et par rapport à un axe horizontal;
- au moins deux sous-réseaux d'émission symétriques par rapport audit axe vertical sont éloignés de la plus grande distance possible ;
- au moins deux sous-réseaux d'émission symétriques par rapport audit axe horizontal sont éloignés de la plus grande distance possible ;
- au moins deux sous-réseaux de réception symétriques par rapport audit axe vertical sont éloignés de la plus grande distance possible ;
- au moins deux sous-réseaux de réception symétriques par rapport audit axe horizontal sont éloignés de la plus grande distance possible ;
- un premier codage de l'onde émise par lesdits sous-réseaux d'émission étant réalisé par décalage de fréquence desdites rampes entre les différents sous-réseaux d'émission ;
- un deuxième codage de l'onde émise par lesdits sous-réseaux d'émission étant réalisé par modulation de phase de rampe de fréquence à rampe de fréquence entre les différents sous-réseaux d'émission ;
- une référence d'oscillateur commune étant utilisée pour réaliser ledit premier codage et ledit deuxième codage de l'onde émise par lignes et par colonnes de desdits sous-réseaux.

Dans un mode de réalisation possible, dans ledit premier codage, une première moitié des sous-réseaux d'émission est alimentée par une première forme d'onde FMCW et la deuxième moitié est alimentée par la même forme d'onde décalée en fréquence, les deux moitiés étant symétriques par rapport audit axe vertical.

Dans un autre mode de réalisation possible, dans ledit premier codage, une première moitié gauche des sous-réseaux d'émission est alimentée par une première forme d'onde FMCW et la deuxième moitié gauche est alimentée par la même forme d'onde décalée en fréquence, lesdites deux moitiés étant symétriques par rapport à l'intersection dudit axe vertical et dudit axe horizontal.

Dans ledit deuxième codage, les ondes alimentant les différents sous-réseaux d'émission appartenant à une même ligne, selon l'axe horizontal, sont par exemple codées par le même code de phase.

Dans un autre mode de réalisation possible, dans ledit premier codage, une première moitié des sous-réseaux d'émission est alimentée par une première forme d'onde FMCW et la deuxième moitié est alimentée par la même forme d'onde décalée en fréquence, les deux moitiés étant symétriques par rapport audit axe horizontal.

Dans ledit deuxième codage, les ondes alimentant les différents sous-réseaux d'émission appartenant à une même colonne, selon l'axe vertical, sont par exemple codées par le même code de phase.

Ledit système d'émission et de réception comporte par exemple un premier générateur de forme d'onde $VCO_A$ générant une première forme d'onde FMCW et un second générateur de forme d'onde $VCO_B$, synchrone et cohérent du premier, générant l'autre forme d'onde FMCW décalée en fréquence. Chacun desdits générateurs de forme d'onde $VCO_A$, $VCO_B$ est par exemple utilisé à la fois pour l'émission et pour la démodulation synchrone des signaux en réception. L'écart de fréquence entre lesdits générateurs de forme d'onde est par exemple choisi pour que les fréquences de battement des signaux en réception démodulés par un même générateur de forme d'onde $VCO_A$ occupent des bandes de fréquence disjointes selon que lesdits signaux en réception proviennent d'une émission issue dudit même générateur $VCO_A$ ou de l'autre générateur $VCO_B$.

Les signaux en réception résultant des différents sous-réseaux d'émission sont par exemple séparés par filtrage et par corrélation en réception, respectivement selon leur bande de fréquence et selon leur code de modulation de phase.

Une première formation de faisceau monopulse deux plans comprenant une voie somme et deux voies de réception est par exemple effectuée en émission par lesdits moyens de traitement, sur chaque voie de réception associée à un sous-réseau de réception, en utilisant les signaux provenant de tout ou partie des sous-réseaux d'émission. Une seconde formation de faisceau monopulse deux plans comprenant une voie somme et deux voies différence est par exemple effectuée en réception par lesdits moyens de traitement, en associant tout ou partie des signaux reçus sur tout ou partie des voies de réception. La détection et la localisation angulaire de cibles sont par exemple effectuées à partir des signaux résultant du produit des faisceaux monopulse d'émission et des faisceaux monopulse de réception.

Le code de modulation de phase appliqué est par exemple un code biphasé ayant la valeur 0 ou $\pi$.

Le code de modulation de phase appliqué est par exemple un code de Hadamard.

Dans un mode de réalisation particulier, ladite antenne comporte six sous-réseaux d'émission et huit sous-réseaux de réception, ledit système d'émission et de réception comportant deux circuit intégrés comportant chacun un générateur des forme d'onde, trois voies d'émission et quatre voies de réception, les trois sous-réseaux d'émission disposés d'un côté d'un desdits axes étant alimentés par les voies d'émission d'un même circuit intégrés, les trois autres sous-réseaux étant alimentés par les voies d'émission de l'autre circuit intégré.

Ledit radar fonctionne par exemple en ondes millimétriques, il est par exemple apte à équiper un véhicule automobile.

D'autres caractéristiques et avantages de l'invention apparaîtront à l'aide de la description qui suit, faite en regard de dessins annexés qui représentent :

- La figure 1, une illustration du principe de réalisation d'une antenne réseau utilisée dans un radar selon l'invention ;
- La figure 2, un exemple de réalisation de l'antenne où le nombre de lignes est impair et où le nombre de colonnes est pair ;
- La figure 3, un exemple de réalisation de l'antenne délimitée par un périmètre rectangulaire ;
- La figure 4, un autre exemple de réalisation de l'antenne à trois lignes et cinq colonnes ;
- La figure 5, un exemple de système d'émission et de réception apte à être couplé à ladite antenne réseau ;
- La figure 6, un exemple de configuration d'antenne adaptée à un type de système d'émission et de réception composé d'un nombre donné de circuits intégrés ;
- La figure 7, un exemple de configuration d'antenne adaptée à un système d'émission composé de deux circuits intégrés comportant chacun trois voies d'émission, quatre voies de réception et un générateur de forme d'onde ;
- La figure 8, un exemple d'un premier codage des ondes émises ;
- La figure 9, l'antenne réseau de la figure 7 séparée en deux moitiés, gauche et droite, symétriques par rapport à l'intersection des axes verticaux et horizontaux de l'antenne ;
- La figure 10, des exemples de codages par modulation de phase de rampe à rampe, selon des lignes ou des colonnes de l'antenne réseau ;
- La figure 11, un exemple de système d'émission apte à être réalisé sur un seul circuit intégré ;
- La figure 12, les bandes spectrales respectivement des signaux reçus démodulés par une première forme d'onde pour les signaux issus de l'émission de ladite première forme d'onde et d'une deuxième forme d'onde ;
- La figure 13, les bancs de filtres disposés à l'intérieur des deux sous-bandes précédentes ;
- La figure 14, les allures des voies sommes d'une première formation de faisceau monopulse deux plans et d'une deuxième formation de faisceau monopulse deux plans ;
- La figure 15, les allures des deux voies différences d'une première formation de faisceau monopulse deux plans et d'une deuxième formation de faisceau monopulse deux plans ;
- La figure 16, des droites d'écartométrie obtenues par l'exploitation des voies sommes et différences précitées.

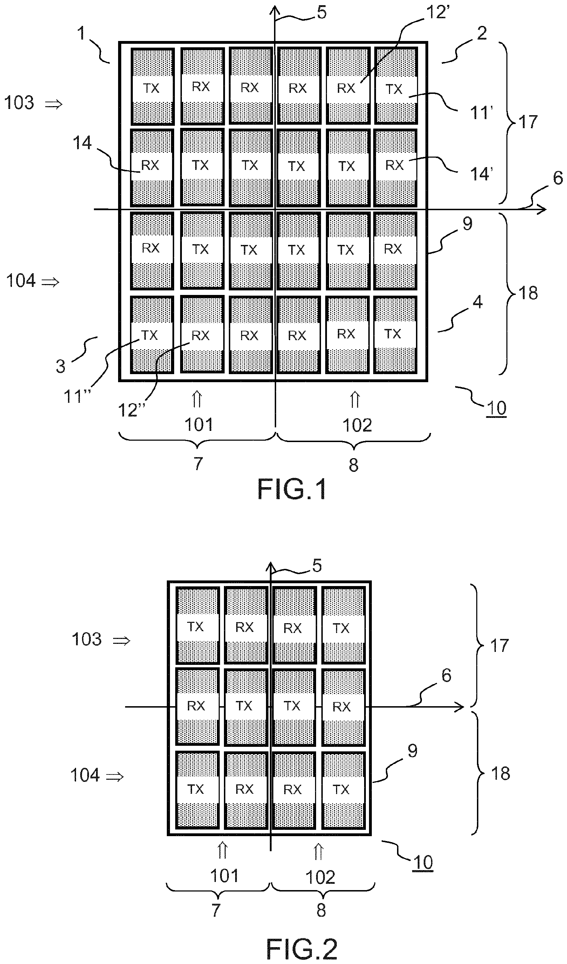

La figure 1 illustre le principe de réalisation d'une antenne réseau utilisée dans un radar selon l'invention.

Dans un radar selon l'invention on dispose sur l'ensemble de la surface de l'antenne 1 disponible, des sous réseaux antennaires adjacents fonctionnant exclusivement en émission 11 ou en réception 11, de façon à réaliser une formation de faisceaux monopulse deux plans en émission et en réception en divisant l'antenne en quatre quadrants 1, 2, 3, 4 à l'émission et à la réception, la formation de faisceau monopulse en émission étant obtenue par un double codage, respectivement en fréquence 101, 102 et en phase 103, 104, selon les quatre quadrants de l'antenne.

L'invention résout avantageusement le problème posé en améliorant la résolution et la précision de localisation angulaire de l'antenne pour une surface antennaire donnée grâce à la multiplication des diagrammes somme et différence réalisés à la fois en émission et en réception. Les lobes secondaires et les lobes ambigus sont limités du fait de l'adjacence des sous réseaux et de leur distribution uniforme.

Le bilan de portée est optimisé par la surface rayonnante de l'antenne qui est maximale, et par le fait que l'émission et la réception sont séparées, ce qui réduit le couplage, donc le bruit en réception.

La formation de faisceaux réalisée en émission est limitée à quatre faisceaux obtenus par sommation et par différenciation ce qui ne nécessite pas de ressources de calcul importantes

Les estimations angulaires obtenues en azimut et en élévation sont obtenues de façons indépendantes et ces estimations sont décorrélées entre elles. Les diagrammes d'antennes composites sont symétriques en azimut et en élévation, ce qui garantit une qualité de détection et de localisation homogène dans le domaine angulaire d'observation.

Il est possible de former des diagrammes champ large ou champ étroits simultanément, pour assurer par exemple une détection à courte portée et à longue portée.

Il est possible de régler le niveau des lobes secondaires en ajustant l'amplitude des signaux à l'émission ou à la réception sur les différents sous réseaux.

Il n'y a pas de dispositif de commutation dans l'antenne, ce qui est favorable au bilan de portée. Le traitement est simple et facile à mettre en œuvre.

La figure 1 illustre le principe de disposition des sous-réseaux 11, 12 à la surface de l'antenne 10. Par la suite, on notera TX les sous-réseaux d'émission et RX les sous-réseaux de réception. Chaque sous-réseau est composé d'un nombre donné d'éléments rayonnants. Une antenne d'un radar selon l'invention comporte P sous-réseaux antennaires d'émission TX et Q sous-réseaux antennaires de réception RX, les sous-réseaux TX et RX étant adjacents entre eux. Ils ont par exemple une ouverture identique et ajustée au domaine de couverture souhaité. De façon préférentielle, tous les sous-réseaux d'émission TX sont identiques et tous les sous-réseaux de réception RX sont identiques. Ils sont disposés de façon à respecter les conditions suivantes :

- Distribuer sur la surface de l'antenne l'ensemble des sous-réseaux TX, RX selon plusieurs lignes horizontales et plusieurs colonnes verticales pour obtenir une répartition symétrique de ces sous-réseaux TX, RX selon l'axe vertical 5 et l'axe horizontal 6, ces deux axes passant par le centre géométrique de l'antenne. En d'autres termes, chaque sous-réseau d'émission 11 a un sous-réseau d'émission symétrique 11' par rapport à l'axe vertical et un sous-réseau d'émission 11" symétrique par rapport à l'axe horizontal. De même, chaque sous-réseau de réception 12 a un sous-réseau de réception symétrique 12' par rapport à l'axe vertical et un sous-réseau de réception 12" symétrique par rapport à l'axe horizontal ;
- Répartir les sous-réseaux d'émission TX sur les différentes lignes et sur les différentes colonnes pour qu'au moins deux sous-réseaux symétriques 11, 11' par rapport à l'axe vertical soient éloignés de la plus grande distance horizontale possible et qu'au moins deux autres sous-réseaux symétriques 11, 11" par rapport à l'axe horizontal soient éloignés de la plus grande distance verticale possible entre sous-réseaux, compte-tenu des limites imposées par la surface disponible de l'antenne ;
- Répartir les sous-réseaux de réception RX sur les différentes lignes et sur les différentes colonnes pour qu'au moins deux sous-réseaux symétriques 14, 14' par rapport à l'axe vertical soient éloignés de la plus grande distance horizontale possible et qu'au moins deux autres sous-réseaux symétriques 12, 12" par rapport à l'axe horizontal soient éloignés de la plus grande distance verticale possible entre sous-réseaux, compte-tenu des limites imposées par la surface disponible de l'antenne ;

La figure 1 présente un exemple de réalisation dans le cas d'une surface rectangulaire, respectant les conditions ci-dessus, où le nombre de lignes est pair, égal à 4, et le nombre de colonnes est pair, égal à 6, et où P = Q = 12.

La figure 2 présente un exemple de réalisation où le nombre de lignes est impair, égal à 3, et où le nombre de colonnes est pair, égal à 4, et où P = Q = 6. Dans ce cas, l'axe de symétrie horizontal 6 passe par des sous-réseaux TX, RX eux-mêmes symétriques par rapport à cet axe.

D'autres configurations sont bien sûr possibles, par exemple avec un nombre P de sous-réseaux antennaires d'émission différent du nombre Q de sous-réseaux antennes de réception, selon notamment les contraintes technologiques imposées par les architectures internes des composantes intégrés utilisés en émission et en réception. Le contour 9 de l'antenne peut également ne pas être rectangulaire comme le montreront par la suite d'autres exemples de réalisation.

En coopération avec un type d'antenne tel qu'illustré par les figures 1 et 2, un radar selon l'invention :

- Réalise à partir d'une référence d'oscillateur commune un double codage de l'émission radar, par lignes et par colonnes de sous réseaux d'émission selon deux types de codage différents, respectivement par modulation en fréquence (selon les colonnes 101, 102 des quadrants par exemple) et par modulation de phase (selon les lignes 103, 104 des quadrants par exemple), de façon à réaliser des émissions orthogonales à la fois entre les différentes lignes ou groupement de lignes de sous réseaux et entre les différentes colonnes ou groupement de colonnes de sous réseaux ;
- Forme une voie somme et une voie différence à l'émission selon l'angle d'azimut en réalisant à l'émission un groupement d'une partie des sous réseaux de la moitié gauche 7 de l'antenne et de façon symétrique un groupement identique de sous réseaux de la partie droite 8 de l'antenne ;

- Forme une voie somme et une voie différence à l'émission selon l'angle d'élévation en réalisant à l'émission un groupement d'une partie des sous réseaux de la moitié supérieure 17 de l'antenne et de façon symétrique un groupement identique d'une partie des sous réseaux de la moitié inférieure 18 de l'antenne ;
- Forme une voie somme et une voie différence en réception selon l'angle d'azimut en utilisant les signaux reçus d'un premier groupement de sous réseaux de réception sur la moitié gauche 7 et d'un deuxième groupement identique et symétrique sur la moitié droite 8 de l'antenne ;
- Forme une voie somme et une voie différence en réception selon l'axe d'élévation en utilisant les signaux reçus d'un premier groupement de sous réseaux de réception sur la moitié supérieure 17 et d'un deuxième groupement identique et symétrique sur la moitié inférieure 18 de l'antenne ;
- Forme les faisceaux de rayonnement composites émission réception correspondant aux voies somme et différences, séparément selon les angles d'azimut et d'élévation ;
- Détecte et estime par écartométrie la position des cibles à partir des voies somme et différences ainsi formées.

Ces phases de traitement sont décrites plus en détail par la suite à l'aide d'exemples de réalisation d'antenne d'un radar selon l'invention.

Avant de présenter ces exemples de réalisation, on revient sur le principe de construction d'une telle antenne.

Les figures 3 et 4 illustrent le principe de réalisation de l'antenne, celle-ci comportant trois lignes et cinq colonnes de sous-réseaux antennes dans l'exemple présenté.

Une première étape de construction consiste à optimiser le nombre et la répartition des sous réseaux antennaires d'émission et de réception sur la surface de l'antenne, surface qui est limitée.

Pour cela, on considère une antenne réseau planaire dont le contour est inscrit dans un périmètre de dimensions déterminées. Dans l'exemple de la figure 3, le périmètre est un rectangle de longueur horizontale L et de longueur verticale H, et dont le domaine de couverture angulaire est imposé et correspond à un cône d'ouverture à 3dB $\Delta\theta_{el}$ radians en élévation et $\Delta\theta_{az}$ radians en azimut. Cette antenne est constituée d'un certain nombre de sous-réseaux affectés à l'émission, et d'un certain nombre de sous réseaux affectés à la réception.

De façon classique, on détermine les dimensions maximum des sous réseaux antennaires d'émission et de réception constituant cette antenne, soit une hauteur maximum verticale h de l'ordre de $\lambda/\Delta\theta_{el}$ et une largeur maximum horizontale $\ell=\lambda/\Delta\theta_{az}$.

On choisit de dimensionner les sous-réseaux antennaires selon leur dimension maximum pour couvrir exactement le domaine angulaire souhaité, afin de restreindre le nombre de voies d'émission et de réception du radar. Ceci conduit à une dimension horizontale $\ell = \lambda/\Delta\theta_{el}$ et à une dimension verticale h= $\lambda/\Delta\theta_{el}$. On choisit par ailleurs d'utiliser le maximum de surface de rayonnement dans les dimensions permises pour l'antenne, pour optimiser à la fois la résolution angulaire et le bilan de portée du radar.

Dans ce cas, une solution avantageuse est de superposer selon l'axe vertical P lignes de sous réseaux et d'aligner selon le plan horizontal Q colonnes de sous réseaux, où P est la valeur entière de (H/h) et Q est la valeur entière de (L/$\ell$). Typiquement, pour un radar automobile fonctionnant à une fréquence de 76 GHz, la longueur d'onde est de 3,9 mm l'ouverture angulaire recherchée est par exemple de l'ordre de 0,15 rd en élévation et de 0,25 rd en Azimut. Les sous réseaux sont réalisés en technologie circuit imprimé de type « patch », et la hauteur d'un sous-réseau est par exemple dans ce cas de l'ordre de 2,5 cm et sa largeur de l'ordre de 1,5 cm.

Par ailleurs les dimensions maximum de l'antenne sont-elles même imposées, typiquement inférieures à 8 cm en hauteur et en largeur.

Ainsi, selon ces valeurs, il est possible théoriquement d'implanter 15 sous réseaux de 2,5 cm de hauteur et de 1,5 cm de largeur selon trois lignes et cinq colonnes conformément à la figure 3.

Il faut ensuite choisir le nombre de sous-réseaux TX affectés à l'émission et le nombre de sous-réseaux RX affectés à la réception. Le nombre maximum de sous-réseaux antennaires étant déterminé, on impose en premier lieu que la distribution des sous réseaux d'émission et des sous réseaux de réception soit symétrique à la fois par rapport à un axe horizontal 6 situé à mi-hauteur de l'antenne, et par rapport à un axe vertical 5 situé à mi-largeur de l'antenne.

On impose en second lieu de disposer au moins deux sous-réseaux d'émission 41, 41' et deux sous réseaux de réception 43, 43' symétriques par rapport à l'axe de symétrie vertical de façon telle que les centres de phase de chacun de ces deux sous-réseaux soient éloignés de la plus grande distance horizontale possible compte tenu de la largeur d'implantation disponible.

On impose en troisième lieu de disposer au moins deux sous-réseaux d'émission 42, 42' et deux sous-réseaux de réception 43, 43' symétriques par rapport à l'axe de symétrie horizontal de façon telle que les centres de phase de chacun de ces deux sous-réseaux soient éloignés de la plus grande distance verticale possible compte tenu de la largeur d'implantation disponible.

On impose en quatrième lieu la répartition la plus uniforme possible des sous réseaux d'émission et des sous réseaux de réception sur l'antenne, les sous-réseaux d'émission TX et de réception RX étant adjacents, et finalement alternés. On impose également de minimiser le nombre de voies d'émission pour simplifier l'architecture physique, réduire la consommation et les risques de couplage émission réception.

Dans ce cas, selon l'exemple précédent d'une antenne comprenant trois lignes et cinq colonnes de sous-réseaux, on aboutit par exemple à l'exemple de configuration de la figure 4 ci-dessous, dans lesquelles les sous-réseaux TX et RX sont alternés selon l'axe vertical et selon l'axe horizontal. Dans le cas d'une antenne comportant un nombre impairs de lignes et/ou de colonnes, la symétrie de construction impose que les axes de symétrie 5, 6 passent par les sous-réseaux de la ligne et/ou de la colonne du milieu, ceux-ci étant eux-mêmes symétriques par rapport à l'axe 5, 6.

Dans l'exemple de la figure 4, l'antenne comprend sept sous-réseaux TX et huit sous-réseaux RX et correspond à un cas optimum du point de vue du rayonnement de l'antenne, compte tenu de la surface disponible. Cependant, en ce qui concerne les radars automobiles, le choix du nombre de sous-réseaux d'émission TX et du nombre de sous-réseaux de réception RX peut être contraint par l'architecture des circuits intégrés hyperfréquences d'émission et de réception associés à ces sous-réseaux. Les exemples de réalisation présentés par la suite seront adaptés à des architectures de circuits intégrés hyperfréquence imposées.

La figure 5 présente un exemple d'un circuit d'émission et de réception susceptible d'être couplé aux sous-réseaux d'une antenne 1 d'un radar selon l'invention. Les fonctions du circuit peuvent être intégrées sur un ou plusieurs composants semi-conducteurs.

Pour l'émission, ce circuit comporte :

- Un oscillateur commandé en tension 50, encore appelé VCO (Voltage Controlled Oscillator) faisant fonction de générateur forme d'onde FMCW, apte à alimenter plusieurs voies d'émission ;
- Un émetteur 51, composé de plusieurs voies d'émission 511, 512, 51i comportant chacune au moins un amplificateur de puissance et un modulateur de phase à deux états $(0, \pi)$, chacune de ces voies alimentant un sous-réseau antennaire d'émission $TX_1$, $TX_2$, $TX_i$.

Pour la réception, il comporte :

- Le même VCO 50 pour effectuer la démodulation des signaux reçus sur les voies de réception ;

  - Un récepteur 52, composé de plusieurs voies de réception 521, 522, 52i comportant au moins un amplificateur faible bruit, une fonction de démodulation synchrone et un filtre, chacune de ces voies recevant un signal d'un sous-réseau antennaire de réception $RX_1$, $RX_2$, $RX_j$.

Les voies de réception réalisent par exemple la démodulation directe des différents signaux reçus par le signal issu du VCO. La conversion numérique des signaux reçus peut également être intégrée dans le même composant que la fonction de réception.

Les fonctions VCO, d'émission TXi et de réception RXj peuvent être intégrées sur des puces différentes ou sur une même puce.

Plusieurs niveaux d'intégration de circuits d'émission et de réceptions sont possibles. L'architecture de l'antenne peut alors avantageusement être adaptée à l'un ou l'autre de ces niveaux d'intégration.

La figure 6 présente une configuration d'antenne correspondant à un niveau d'intégration où deux voies d'émission sont intégrées sur une même puce, trois voies de réception sont intégrées sur une même puce avec un VCO séparé. En se référant à la figure 5, cela revient à avoir $TX_1$ et $TX_2$ sur une même puce, et $RX_1$, $RX_2$ et $RX_3$ sur une autre puce. En utilisant ces composants intégrés, disponibles notamment sur le marché, la configuration d'antenne comporte un multiple de 2 TX (2 sous-réseaux d'émission) et de 3 RX (3 sous-réseaux de réception). Dans le cas de la figure 6, le multiple est 3, l'antenne comportant 15 sous-réseaux antennaires, dont 6 sous-réseaux d'émission TX et 9 sous-réseaux de réception RX, ceux-ci étant disposés selon les règles définies précédemment. On utilise donc trois puces d'émission $TX_1$, $TX_2$ et trois puces de réception $RX_1$, $RX_2$, $RX_3$.

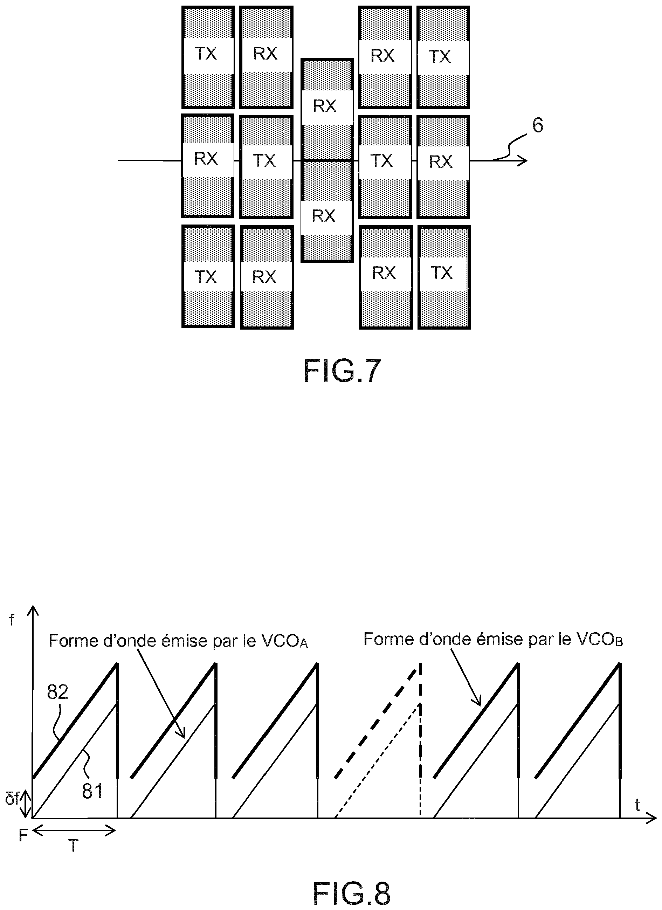

La figure 7 présente une configuration d'antenne correspondant à un niveau d'intégration où trois voies d'émission, quatre voies de réception et le VCO sont sur une même puce. En référence à la figure 5, un circuit intégré comporte donc 3 TX, 4 RX et un VCO, soit $TX_1$, $TX_2$ et $TX_3$ et $RX_1$, $RX_2$, $RX_3$ et $RX_4$ et le VCO sur une même puce. En utilisant ce circuit intégré, la configuration d'antenne comporte un multiple de 3 TX et 4 RX. Dans le cas de la figure 7 on utilise deux circuits intégrés, le multiple étant égal à 2. L'antenne comporte donc 14 sous-réseaux antennaires, répartis en 6 sous-réseaux TX et 8 sous-réseaux RX.

Pour établir la configuration, on supprime un sous-réseau de réception RX par rapport à celle de la figure 6. Celui-ci est supprimé sur la colonne du milieu, les deux sous-réseaux restant étant décalés de façon à être symétriques par rapport à l'axe de symétrie horizontal 6.

La configuration de la figure 7 est une solution avantageuse adaptée à l'utilisation des circuits intégrés 3 TX, 4 RX.

Par la suite on considérera, à titre d'exemple, cette solution comme solution de référence.

La figure 8 présente un premier type de codage utilisé par l'invention, plus précisément le codage en fréquence appliqué selon une dimension de l'antenne, le codage appliqué selon l'autre dimension étant le codage en phase qui sera présenté par la suite.

Selon l'invention, on réalise ce premier codage de l'onde émise en générant des suites de rampes de fréquences 81, 82 identiques mais décalée en fréquence. Chacune de ces rampes est générée par un VCO.

Le codage peut être réalisé de façon préférentielle en générant une première forme d'onde d'émission 81 réalisant de façon périodique une première rampe de fréquence à l'aide d'un premier VCO, noté $VCO_A$, et une seconde forme d'onde 82 identique et synchrone de la première mais décalée en fréquence d'un écart $\delta f$, à l'aide d'un deuxième VCO, noté $VCO_B$, les deux VCO étant pilotés par une même horloge de référence. Ces rampes de fréquence sont cohérentes et orthogonales entre elles.

Un tel codage est connu. Il est notamment décrit par exemple dans l'article de Matthias Steinhauer « Millimeter-Wave-Radar Sensor Based on a Tranceiver Array for Automotive Applications », IEEE Transactions on Microwave Theory and Techniques (Volume 56, pages 262-269, février 2008).

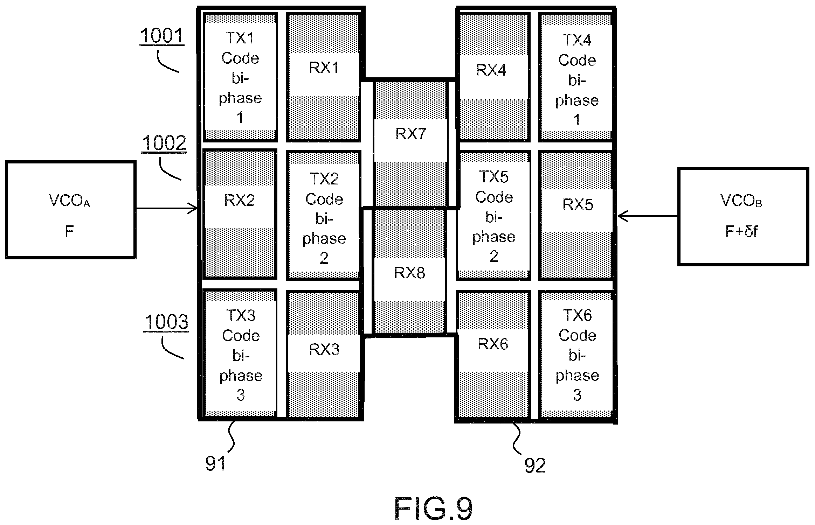

On se réfère à la figure 9 qui reprend l'antenne présentée en figure 7. Celle-ci est séparée en deux parties, deux moitiés. Une première moitié 91 comporte les sous-réseaux antennaires situés dans la partie gauche de l'antenne ainsi que le sous-réseau de réception RX7 supérieur de la colonne du milieu. La deuxième moitié 92 comporte les sous-réseaux antennaires situés dans la partie droite de l'antenne ainsi que le sous-réseau de réception RX8 inférieur de la colonne du milieu. Le codage illustré par la figure 8 permet de distinguer ces deux moitiés.

Ainsi, selon l'invention, la forme d'onde issue du $VCO_A$ alimente les voies d'émission TX d'une première moitié 91 et est également utilisé comme référence de démodulation pour les voies de réception RX de cette première moitié 91. De même la forme d'onde issue du $VCO_B$ alimente les voies d'émission TX de l'autre moitié 92 et est également utilisée comme référence de démodulation pour les voies de réception RX de cette autre moitié 92.

Par exemple, le $VCO_A$ alimente la partie gauche de l'antenne et le $VCO_B$ la partie droite de façon symétrique.

En numérotant les différente réseaux antennaires TX et RX selon la figure 9, le $VCO_A$ est par exemple associé aux sous-réseaux $TX_1$, $TX_2$, $TX_3$ pour l'émission et aux sous-réseaux $RX_1$, $RX_2$, $RX_3$, $RX_7$ pour la démodulation en réception. De façon symétrique, le $VCO_B$ est associé aux $TX_4$, $TX_5$, $TX_6$ pour l'émission et $RX_4$, $RX_5$, $RX_6$, $RX_8$ pour la démodulation en réception.

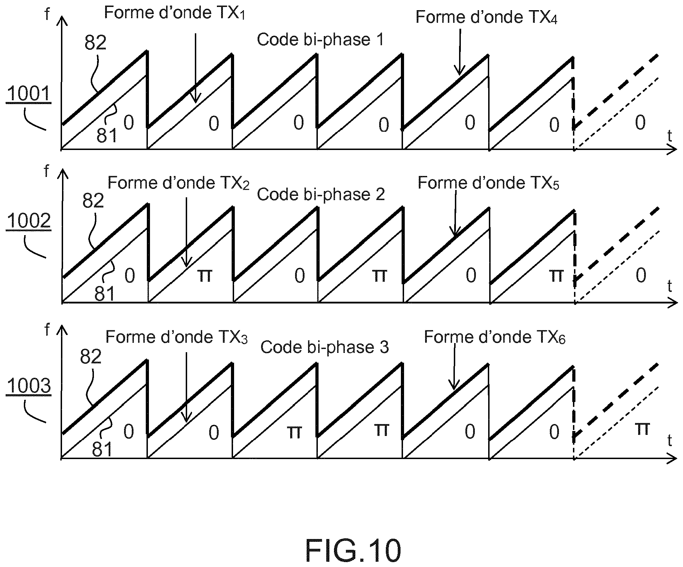

La figure 10 illustre le second codage, effectué selon l'autre dimension, c'est-à-dire selon les lignes. Ce second codage effectué cette fois ci en phase, est réalisé au niveau des différentes voies d'émission 511, 512, 51i du circuit d'émission et de réception.

Ce codage s'effectue de rampe à rampe, à l'aide d'une modulation biphasée, comprenant deux états de phase possibles, 0 et $\pi$. Les différents codes sont orthogonaux entre eux. De façon préférentielle, les différentes voies d'émission d'une même ligne sont modulées par le même code.

De façon préférentielle les codes choisis sont des codes d'Hadamard. Ces codes comprennent $M=2^p$ moments et sont parfaitement orthogonaux entre eux sur une rafale de M rampes successives. D'autres codes orthogonaux sont bien sûr possibles.

La figure 10 présente trois codes de phases 1001, 1002, 1003 effectué de rampe à rampe, c'est-à-dire que le code de phase est susceptible de varier d'une rampe à la suivante. Le premier code 1001 affecte la valeur de phase 0 sur toutes les rampes. Le deuxième code 1002 affecte la valeur 0 une rampe sur deux alternativement avec la valeur $\pi$. Le troisième code affecte le code 0 sur deux rampes successives puis les code $\pi$ sur les deux rampes suivantes et ainsi de suite.

En se référant à la figure 9, le premier code de phase 1001 est affecté à la première ligne, soit aux voies d'émission alimentant les sous-réseaux TX1 et TX4. Le deuxième code de phase 1002 est affecté à la première ligne, soit aux voies d'émission alimentant les sous-réseaux TX2 et TX5. Le troisième code de phase 1003 est affecté à la première ligne, soit aux voies d'émission alimentant les sous-réseaux TX3 et TX6.

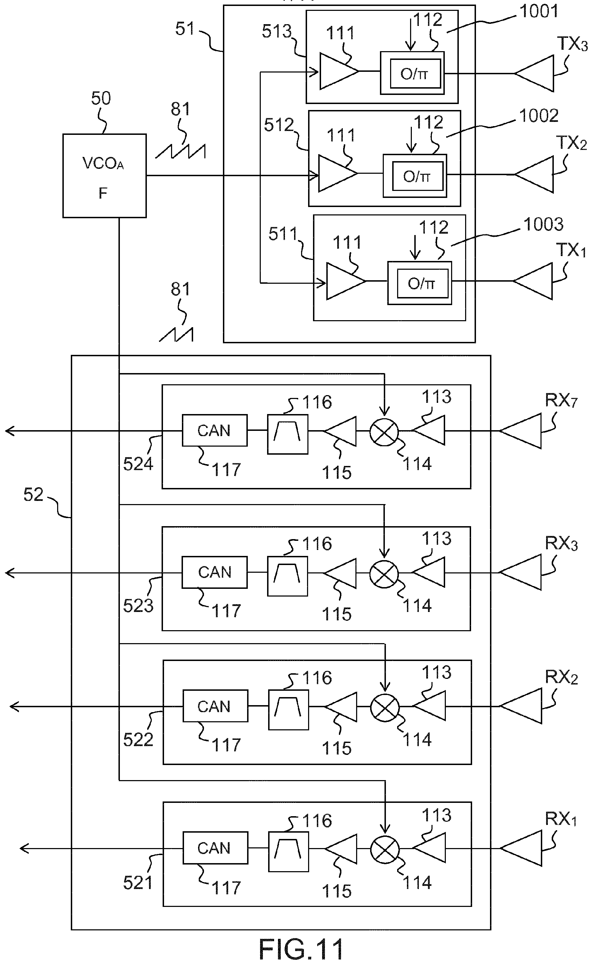

La figure 11 présente le schéma du circuit d'émission et de réception affecté à une demi-antenne, plus particulièrement à la partie gauche 91, tous les éléments du circuit pouvant avantageusement être intégrés dans un même composant. Par rapport au schéma de la figure 5, celui-ci présente les trois voies d'émission 511, 512, 513 et les quatre voies de réception 521, 522, 523, 524. Le VCO délivre le signal d'émission bas niveau selon la première rampe de fréquences 81 réalisant ainsi le premier code, en fréquence. Le signal est amplifié par un amplificateur de puissance 111 dans chaque voie d'émission, ce dernier est suivi d'un déphaseur 112. Ce dernier applique le code associé à la voie d'émission comme décrit précédemment.

En réception, chaque voie comporte en entrée un mélangeur 114 recevant sur une première entrée le signal reçu issu du sous-réseau associé, éventuellement amplifié par un premier amplificateur 113. La deuxième entrée du mélangeur reçoit le signal de rampe 81 fourni par le VCO. Le signal reçu est ainsi démodulé et amplifié en sortie du mélangeur par un amplificateur faible bruit 115. Un filtrage 116 et une conversion analogique-numérique suivent cet amplificateur, la voie de réception délivrant en sortie un signal numérisé apte à être traité par les moyens de traitement du radar. De façon symétrique, un même circuit est couplé à la partie droite 92 de l'antenne, avec un VCO délivrant la rampe de fréquence décalée 82.

Dans le traitement en sortie de la chaîne de réception, à partir de ces signaux reçus et numérisés, on réalise la séparation fréquentielle et la compression distance des signaux issus de l'émission produite par les deux VCO.

Dans un radar FMCW, il est connu de l'homme de l'art de limiter la bande passante de sortie du récepteur à l'aide d'un filtre passe bas dont la fréquence de coupure est ajustée à la portée instrumentée maximum, de façon à ne traiter que les signaux utiles.

Ainsi pour une bande de modulation $\Delta F$ et une durée de rampe T, un écho correspondant à une cible située à la distance instrumentée maximum $D_{max}$ du radar, la fréquence de battement maximum $f_{bmax}$ est (hors doppler qui introduit un écart négligeable) :

$$f_{bmax} = \frac{\Delta F}{T} \frac{2D_{max}}{C} \quad (1)$$

où C est la célérité de la lumière.

Dans le cas habituel où le signal d'émission est utilisé pour démoduler le signal de réception, le spectre de fréquence résultant de la démodulation synchrone s'étend ainsi de 0 à $+f_{bmax}$

La fréquence de coupure du filtre passe bas est ainsi choisie égale à $f_{bmax}$.

Selon l'architecture particulière illustrée par la figure 9, les différents récepteurs reçoivent d'une même cible des échos provenant de l'émission issue du $VCO_A$ dans une bande comprise entre F et F+$\Delta$F et d'autres échos provenant de l'émission issue du $VCO_B$ dans une bande F-$\delta$f et F-$\delta$f+$\Delta$F.

Pour les récepteurs dont le signal de démodulation est généré par le $VCO_A$, la bande de fréquence en réception après démodulation s'étend ainsi de 0 à $f_{bmax}$ pour les signaux émis à partir du $VCO_A$ et s'étend de -$\delta$f à -$\delta$f+$f_{bmax}$ pour les signaux émis à partir du $VCO_B$.

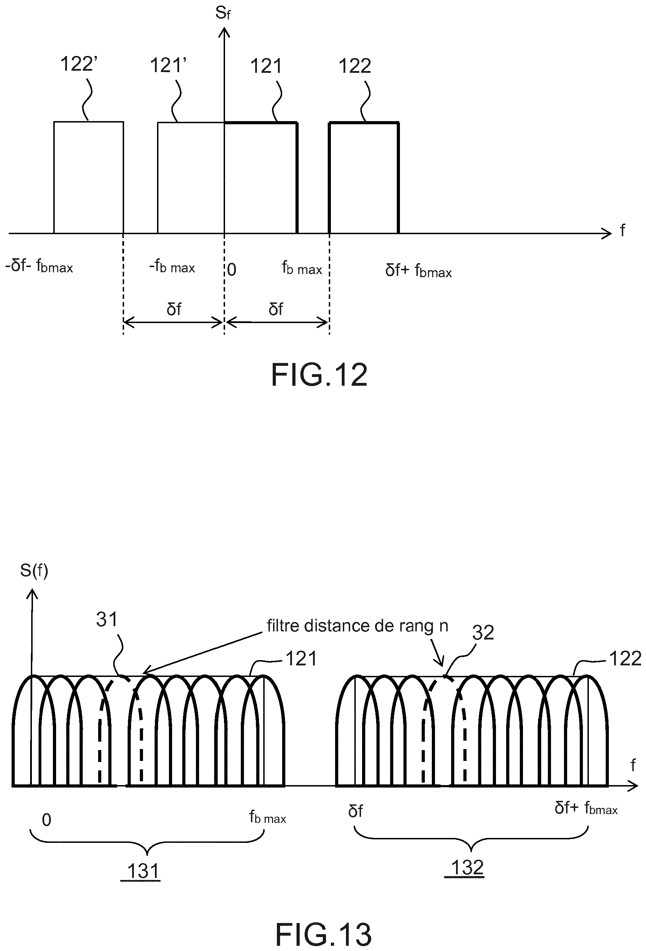

Ainsi, en choisissant un écart de fréquence $\delta$f entre les deux VCO supérieur à la fréquence de battement $f_{bmax}$, les spectres en fréquence des signaux de réception démodulés par l'un des VCO et provenant des émissions à partir des deux VCO occupent des bandes disjointes et peuvent être séparés par filtrage, ceci est illustré par la figure 12.

La figure 12 illustre les bandes spectrales 121, 122 correspondant aux signaux reçus démodulés par le $VCO_A$, VCO du premier circuit d'émission et de réception, dans un système d'axes où les abscisses représentent les fréquences f et les ordonnées l'amplitude du spectre. Le premier domaine 121 compris entre 0 et $f_{bmax}$ est le domaine spectral des échos résultant de l'émission issue de $VCO_A$ après démodulation par $VCO_A$. Le deuxième domaine 122 compris entre 5f et $\delta$f+$f_{bmax}$ est le domaine spectral des échos résultant de l'émission issue de $VCO_B$ après démodulation par $VCO_A$. Symétriquement par rapport à l'axe f = 0, les domaines 121' et 122' représentent respectivement le domaine spectral des échos résultant de l'émission issue de $VCO_A$ après démodulation par $VCO_B$ et le domaine spectral des échos résultant de l'émission issue de $VCO_B$ après démodulation par $VCO_B$.

Ainsi en réalisant un filtrage passe-bande en réception comprenant deux sous-bandes distinctes comme illustré par la figure 12, il est possible de séparer sur chaque voie de réception les signaux résultant des émissions des deux VCO. En d'autres termes, le codage en fréquence permet de séparer les signaux selon qu'ils sont émis par la partie gauche 91 ou la partie droite 92 de l'antenne.

En supposant la phase à l'origine des rampes de fréquence du $VCO_A$ égale à zéro, le signal $s_{i,j}(t)$ reçu à l'instant t sur le récepteur d'indice j associé au sous-réseau $RX_j$, après démodulation par le $VCO_A$ et relativement à une émission réalisée à partir du $VCO_A$ alimentant l'émetteur d'indice i associé à $TX_i$, s'écrit :

$$s_{i,j}(t) = Ae^{-2j\pi.\frac{\left(D_i(t)+D_j(t)\right)}{c}F}.e^{-2j\pi\left(\frac{(D_i(t)+D_j(t))\Delta F}{CT}+\frac{2v_r}{\lambda}\right)t}e^{-2j\pi\,\varphi0_i(mTr)} \quad (2)$$

où l'exposant du premier terme du produit est le terme de phase qui est fonction de la distance et de l'angle de la cible par rapport au TXi et au RXj, et l'exposant du deuxième terme est la fréquence $f_b$, fréquence distance ambiguë distance/Doppler.

avec

A : amplitude du signal reçu
$\Delta F$ : bande de modulation de la rampe FMCW
F : fréquence de début de rampe du $VCO_A$
$D_i(t)$: distance entre le centre de phase du sous réseau d'émission $TX_i$ et la cible à l'instant t
$D_j(t)$: distance entre le centre de phase du sous réseau de réception $RX_j$ et la cible à l'instant t
vr : vitesse de déplacement de la cible

t: temps, avec $t = mTr + \frac{(D_i(t)+D_j(t))}{c}$

C: célérité

$\lambda$ : longueur d'onde du signal d'émission considérée comme constante relativement à l'effet doppler

$\varphi0_i(mTr)$ : phase à l'origine de la rampe de fréquence émise par l'émetteur $TX_i$ à la récurrence Tr de rang m, selon le code de phase appliqué au $TX_i$ où $t = mTr + 2\frac{(D_i(t)+D_j(t))}{c}$

Le deuxième terme de l'équation (2) peut se simplifier en tenant compte du fait que $D_i(t)$ est sensiblement égal $D_j$ (t) et en posant :

$$D(t) = \frac{(D_i(t)+D_j(t))}{2} \qquad (3)$$

$$F_d = \frac{2V_r}{\lambda} \qquad (4)$$
$$\text{et } f_b = \frac{2D(t)\Delta F}{cT} + F_d$$

A l'échelle d'une rampe de fréquence 81, 82, la distance de la cible peut être considérée comme constante, et D(t) =D. Dans ce cas :

$$f_b = \frac{2D\Delta F}{cT} + F_d \qquad (5)$$

et

$$s_{i,j}(t) = Ae^{-2j\pi.\frac{(D_i(t)+D_j(t))}{c}F}.e^{-2j\pi f_b t}e^{-2j\pi\,\varphi0_i(mTr)} \qquad (6)$$

De même, en supposant la phase à l'origine des rampes de fréquence du $VCO_B$ égale à zéro, le signal $s_{k,j}(t)$ reçu sur le récepteur d'indice j associé à $RX_j$, après démodulation par le $VCO_A$ relativement à une émission réalisée à partir du $VCO_B$ à la fréquence F+$\delta$f alimentant l'émetteur d'indice k associé à $TX_k$, s'écrit :

...

$$s_{k,j}(t) = Ae^{-2j\pi.\frac{(D_k(t)+D_j(t))}{c}(F+\delta f)}.e^{-2j\pi\,(f_b+\delta f)t}e^{-2j\pi\,\varphi0_k(mTr)} \qquad (7)$$

où:

- $D_k$ est la distance entre le centre de phase du sous-réseau d'émission $TX_k$ et la cible ;
- $\varphi0_k(mTr)$ est la phase à l'origine de la rampe de fréquence émise par l'émetteur $TX_k$ à la récurrence Tr de rang m, selon le code de phase appliqué au $TX_k$.

Pour les récepteurs dont le signal de démodulation est généré par le $VCO_A$, la bande de fréquence en réception après démodulation s'étend ainsi de 0 à $f_{bmax}$ pour les signaux émis à partir du $VCO_A$ et s'étend de -$\delta$f à -$\delta$f+$f_{bmax}$ pour les signaux émis à partir du $VCO_B$. (en négligeant la fréquence doppler qui est très faible devant l'écart de fréquence d'émission $\delta$f).

Il est alors possible de séparer à la réception les signaux provenant des deux VCO, par un filtrage passe bande, effectué de façon préférentielle en numérique, typiquement par une transformée de Fourrier (FFT ou DFT) La démodulation suivie de la transformée de Fourrier correspond de façon classique à la compression du signal en distance, selon

une résolution $\Delta D = \frac{C}{2\Delta F}$. En sortie du filtrage, le signal est décomposé en N filtres distance (ou cases distance) conformément à la figure 13.

Cette décomposition s'effectue de façon identique pour les signaux émis par le VCO$_A$ et démodulés par ce même VCO$_A$ et pour les signaux émis par le VCO$_B$ et démodulés par le VCO$_A$.

La figure 13 illustre donc les bancs de filtres ainsi créés disposés à l'intérieur des deux sous-bandes 121, 122. Un premier banc 131 de N filtres distance correspond à l'émission issue de VCO$_A$ et à la démodulation par VCO$_A$. Un deuxième banc 132 de N filtres distance correspond à l'émission issue de VCO$_B$ et à la démodulation par VCO$_A$. On peut ainsi décomposer les deux sous-bandes 121, 132 en cases distance.

Ainsi, dans le premier banc 131 de N filtres correspondant à l'émission TX$_i$ issue du VCO$_A$, pour le récepteur RX$_j$, la phase du signal en sortie d'un filtre distance 31 de rang n à la récurrence m est égale, d'après la relation (6), à :

$$\varphi_{i,j}(mTr) = -2j\pi . \frac{\left(D_i(t)+D_j(t)\right)}{c} F - 2j\pi\,\varphi 0_i(mTr) \qquad (8)$$

Dans le second banc 132 de N filtres correspondant à l'émission TX$_k$ issue du VCO$_A$, pour le récepteur RX$_j$, la phase du signal en sortie d'un filtre distance 32 de rang n à la récurrence m est égale, d'après la relation (7), à :

$$\varphi_{k,j}(mTr) = -2j\pi . \frac{\left(D_k(t)+D_j(t)\right)}{c} (F + \delta f) - 2j\pi\,\varphi 0_k(mTr) \qquad (9)$$

Les signaux en sortie de ces filtres de rang n à la récurrence d'ordre m peuvent s'écrire sous forme simplifiée respectivement :

$$U_{i,j}(n,m) = Ae^{-2j\pi . \frac{\left(D_i(t)+D_j(t)\right)}{c} F} e^{-2j\pi\,\varphi 0_i(mTr)} \qquad (10)$$

et

$$U_{k,j}(n,m) = Ae^{-2j\pi . \frac{\left(D_k(t)+D_j(t)\right)}{c}(F+\delta f)} e^{-2j\pi\,\varphi 0_k(mTr)} \qquad (11)$$

Après séparation en distance par le traitement précédent, correspondant au temps court, effectué sur chaque rampe de fréquence, les moyens de traitement du radar réalisent par exemple de façon classique un traitement d'intégration cohérente sur l'axe doppler, visant à optimiser le rapport signal à bruit et à séparer les cibles en fonction de leur vitesse, par transformée de Fourrier numérique (FFT ou DFT).

Ce traitement est précédé d'une corrélation en phase visant à séparer les signaux reçus correspondant aux différentes lignes d'émission TX$_i$ de l'antenne.

Ce traitement est effectué sur un ensemble de M rampes de fréquences successives, pour chaque filtre distance ou éventuellement sur un nombre limité de filtres distance correspondant au domaine de détection souhaité. Dans les expressions (10) et (11) ci-dessus, les termes de distance $D_i$(t),$D_j$(t) *et* $D_k$(t) sont fonction à la fois de la distance initiale, de la vitesse radiale et de la localisation angulaire des cibles au cours de la rafale Doppler.

Ainsi, pour une cible donnée, en prenant comme origine O le centre physique de l'antenne réseau et en notant :

- $dx_i$ : hauteur du centre de phase du sous réseau antennaire RX$_i$ par rapport à O
- $dy_i$: distance horizontale du centre de phase du sous réseau antennaire RX$_i$ par rapport à O
- $dx_k$: hauteur du centre de phase du sous réseau antennaire T$_k$ par rapport à O
- $dy_k$ : distance horizontale du centre de phase du sous réseau antennaire TX$_k$ par rapport à O
- $dx_k$ : hauteur du centre de phase du sous réseau antennaire T$_k$ par rapport à O
- $dy_k$ : distance horizontale du centre de phase du sous réseau antennaire TX$_k$ par rapport à O
- $\theta_{az}$ : angle d'azimut de la cible considérée
- $\theta_{el}$ : angle d'élévation de la cible considérée
- $D_0$ : Distance entre l'antenne et la cible à l'origine temporelle d'une rafale doppler constituée de M rampes successives

On peut écrire :

$$D_k(t) = D_0 + V_r t + (dx_k \sin(\Theta_{el}) + dy_k \sin(\Theta_{az}))$$

$$D_j(t) = D_0 + V_r t + (dx_j \sin(\Theta_{el}) + dy_j \sin(\Theta_{az}))$$

$$D_i(t) = D_0 + V_r t + (dx_i \sin(\Theta_{el}) + dy_i \sin(\Theta_{az}))$$

Les signaux $U_{i,j}(n, m)$ en sortie du filtrage distance peuvent ainsi s'écrire selon la relation (12) suivante :

$$U_{i,j}(n,m) = A e^{\frac{-4j\pi D_0 F}{c}} e^{-2j\pi F_d t} e^{-2j\pi.\frac{(dx_i+dx_j)\sin(\Theta_{el})+(dy_i+dy_j)\sin(\Theta_{az})}{c}F} e^{-2j\pi\,\varphi 0_i(mTr)}$$

où les exposants représentent successivement :

- Un terme de phase fonction de la distance ;
- Un terme de phase fonction de la vitesse de la cible ;
- Un terme de phase fonction de la localisation angulaire ;
- Un terme de phase fonction de la phase à l'origine de la rampe de fréquence m pour la voie d'émission associée au sous-réseau TXi, selon le code de phase appliqué.

et :

$$U_{k,j}(n,m) =$$
$$A e^{\frac{-4j\pi D_0(F+\delta f)}{c}} e^{-2j\pi F_d t} e^{-2j\pi.\frac{(dx_k+dx_j)\sin(\Theta_{el})+(dy_k+dy_j)\sin(\Theta_{az})}{c}(F+\delta f)} e^{-2j\pi\,\varphi 0_k(mTr)} \quad (13)$$

avec

$$F_d = \frac{2v_r F}{c} \# \frac{2v_r(F+\delta f)}{c} \qquad (14)$$

Les opérations de corrélation en phase et la compression Doppler sont effectuées en une seule opération en réalisant une transformée de Fourier sur le signal en sortie du filtre distance modulé par le conjugué du code de phase appliqué au TXi considéré :

$$V_{i,j}(l,n) = \sum_{m=0}^{M-1} U_{i,j}(n,m)\, e^{+2j\pi\,\varphi 0_i(mTr)} e^{+2j\pi\frac{lm}{M}} \qquad (15)$$

Pour une cible de fréquence doppler $F_d = \frac{l}{MT_r}$ correspondant au centre d'un filtre doppler de rang *l*, la sortie du filtre doppler correspondant au récepteur $RX_j$ pour le signal émis par l'émetteur $TX_i$ peut s'écrire sous forme simplifiée :

$$W_{i,j}(n,l) = A e^{\frac{-4j\pi D_0 F}{c}} e^{-2j\pi.\frac{(dx_i+dx_j)\sin(\Theta_{el})+(dy_i+dy_j)\sin(\Theta_{az})}{c}F} \qquad (16)$$

et de même, la sortie du filtre doppler correspondant au récepteur $RX_j$ pour le signal émis par l'émetteur $TX_k$ peut s'écrire sous forme simplifiée :

$$W_{k,j}(n, l) = Ae^{\frac{-4j\pi D_0(F+\delta f)}{c}} e^{-2j\pi.\frac{(dx_k + dx_j)\sin(\theta_{el}) + (dy_k + dy_j)\sin(\theta_{az})}{c}(F+\delta f)} \quad (17)$$

Ainsi, en reprenant la configuration de la figure 9, il est possible de calculer pour chaque récepteur la réponse correspondant à chaque émetteur de façon séparée.

Par exemple, pour la voie de réception associée au sous-réseau $RX_1$, les réponses sont les suivantes pour les différentes émissions :

$TX_1$ :
$$W_{1,1}(n, l) = Ae^{\frac{-4j\pi D_0 F}{c}} e^{-2j\pi.\frac{(dx_1 + dx_1)\sin(\theta_{el}) + (dy_1 + dy_1)\sin(\theta_{az})}{c}F}$$

$TX_4$ :
$$W_{4,1}(n, l) = Ae^{\frac{-4j\pi D_0(F+\delta f)}{c}} e^{-2j\pi.\frac{(dx_4 + dx_1)\sin(\theta_{el}) + (dy_4 + dy_1)\sin(\theta_{az})}{c}(F+\delta f)}$$

$TX_2$ :
$$W_{2,1}(n, l) = Ae^{\frac{-4j\pi D_0 F}{c}} e^{-2j\pi.\frac{(dx_2 + dx_1)\sin(\theta_{el}) + (dy_2 + dy_1)\sin(\theta_{az})}{c}F}$$

$TX_5$ :
$$W_{5,1}(n, l) = Ae^{\frac{-4j\pi D_0(F+\delta f)}{c}} e^{-2j\pi.\frac{(dx_5 + dx_1)\sin(\theta_{el}) + (dy_5 + dy_1)\sin(\theta_{az})}{c}(F+\delta f)}$$

$TX_3$ :
$$W_{3,1}(n, l) = Ae^{\frac{-4j\pi D_0 F}{c}} e^{-2j\pi.\frac{(dx_3 + dx_1)\sin(\theta_{el}) + (dy_3 + dy_1)\sin(\theta_{az})}{c}F}$$

$TX_6$ :
$$W_{6,1}(n, l) = Ae^{\frac{-4j\pi D_0(F+\delta f)}{c}} e^{-2j\pi.\frac{(dx_6 + dx_1)\sin(\theta_{el}) + (dy_6 + dy_1)\sin(\theta_{az})}{c}(F+\delta f)}$$

Il en va de même pour les signaux reçus sur les autres sous-réseaux de réception, ce qui permet de calculer d'une façon générale pour chaque case distance de rang n et pour chaque filtre doppler de rang $l$, les réponses $W_{p,q}(l,n)$ pour p = 1 à 6 (indice du sous-réseau d'émission) et pour q = 1 à 8 (indice du sous-réseau de réception).

Après avoir séparé les signaux reçus grâce aux deux types de codes utilisés, c'est en sommant et en différenciant ces réponses $W_{p,q}(l,n)$ que l'on forme par la suite les voies somme et différence.

On décrit ci-après la formation des voies somme et différence à l'émission, puis à la réception par le radar.

A partir des traitements précédents, les signaux reçus $W_{p,q}(l,n)$ sur chaque récepteur d'indice q sont séparés selon leur émetteur d'origine d'indice p. Comme précédemment on nomme récepteur RX la voie de réception associée au sous-réseau de réception RX. De même on nomme émetteur TX la voie de réception associée au sous-réseau d'émission TX.

Ces signaux étant ainsi séparés, on forme alors séparément et pour chaque récepteur d'indice p, les voies somme $\Sigma$ et différence $\Delta$ à l'émission :

en azimut :

$$\Sigma eaz_q(n, l) = \sum_{p=1}^{p=6} W_{p,q}(n, l) \quad (18)$$

$$\Delta eaz_q(n, l) = \sum_{p=1}^{p=3} W_{p,q}(n, l) - \sum_{p=4}^{p=6} W_{p,q}(n, l) \quad (19)$$

et en élévation :

$$\Sigma eel_q(n, l) = \Sigma eaz_q(n, l) = \sum_{p=1}^{p=6} W_{p,q}(n, l) \quad (20)$$

$$\Delta eel_q(n, l) = (W_{1,q}(n, l) + W_{4,q}(n, l)) - (W_{3,q}(n, l) + W_{6,q}(n, l)) \quad (21)$$

On remarque dans cet exemple, que pour la voie élévation, seuls quatre émetteurs sont utilisés dans le plan vertical, les émetteurs de la ligne centrale ne pouvant contribuer à la réalisation de la voie différence en élévation. En particulier, la relation (19) traduit le fait qu'on n'utilise pas les deux sous-réseaux d'émission TX2 et TX5 de la ligne du milieu car ils s'annulent mutuellement et n'apportent donc pas d'informations.

Le traitement réalise une focalisation du signal d'émission sur trois faisceaux. Pour un axe donné, azimut ou élévation, les diagrammes d'antenne voie somme et voie différence ainsi formés sont identiques en amplitude pour tous les récepteurs et leur phase diffère selon la position des différents récepteurs dans le réseau antennaire.

Le traitement de formation de faisceau en réception est réalisé en associant les signaux reçus de chaque récepteur après le traitement de formation de faisceaux en émission tel que décrit précédemment.

Ce traitement consiste à réaliser de façon indépendante les voies somme et différence selon les deux axes, azimut et élévation.

En azimut :

$$\Sigma eraz(n,l) = \sum_{q=1}^{q=8} \Sigma eaz_q(n,l) \qquad (22)$$

$$\Delta eraz(n,l) = \sum_{q=1}^{q=3} \Delta eaz_q(n,l) - \sum_{q=4}^{q=6} \Delta eaz_q(n,l) \qquad (23)$$

On remarque dans cet exemple, que seuls six récepteurs sont utilisés dans le plan horizontal pour réaliser la voie delta en azimut, les récepteurs de la colonne centrale ne pouvant contribuer à cette réalisation.

En élévation :

$$\Sigma erel(n,l) = \Sigma eraz(n,l) = \sum_{q=1}^{q=8} \Sigma eaz_q(n,l) \qquad (24)$$

$$\Delta erel(n,l) = (\Delta eel_1(n,l) + \Delta eel_4(n,l) + \Delta eel_7(n,l)) - (\Delta eel_3(n,l) + \Delta eel_8(n,l) + \Delta eel_6(n,l)) \qquad (25)$$

On remarque dans cet exemple, que seuls six récepteurs sont utilisés dans le plan vertical pour réaliser la voie delta en élévation, les récepteurs de la ligne centrale ne pouvant contribuer à cette réalisation.

Ce traitement réalise une focalisation en réception. Le résultat final correspond à la multiplication des diagrammes émission/réception.

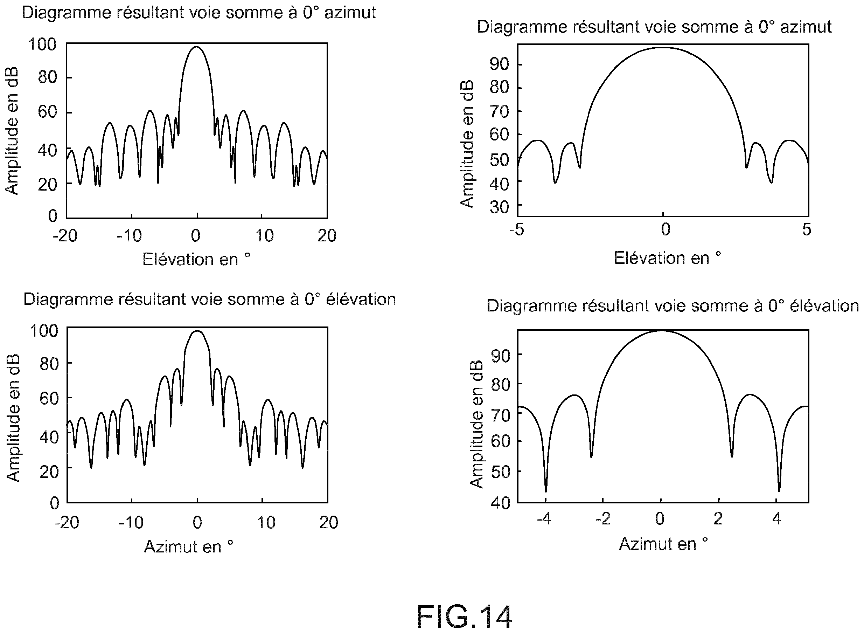

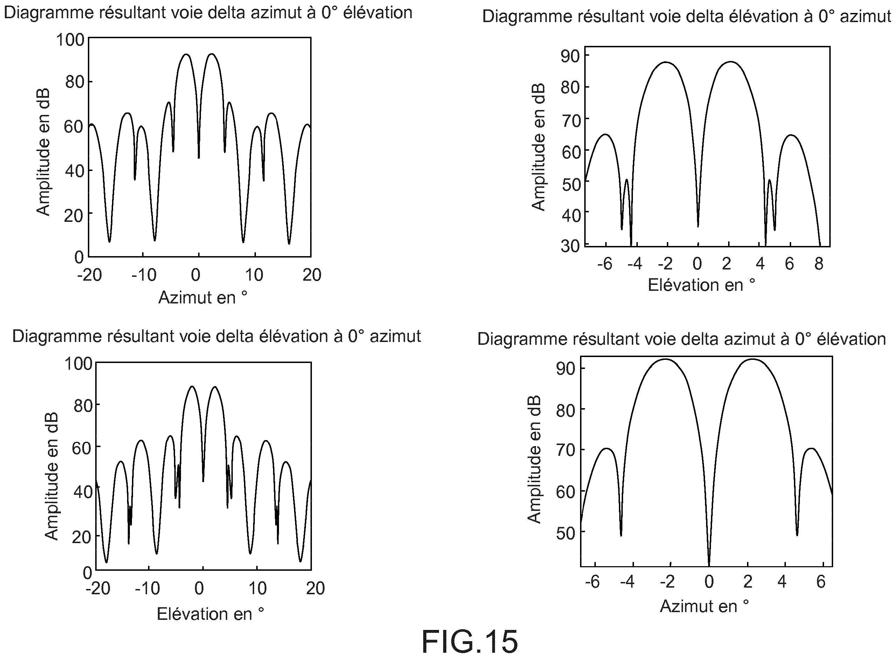

Les figures 14 et 15 représentent l'allure des diagrammes d'antenne obtenus après formation de voie en émission et en réception, correspondant à l'exemple d'antenne considéré à la figure 9, pour les voies somme et différence, la figure 14 illustrant la voie somme et la figure 15 illustrant les deux voies différences.

Ces diagrammes sont obtenus sans pondération d'amplitude des sous réseaux. Selon le besoin, le niveau des lobes secondaires peut encore être réduit en appliquant une telle pondération.

De façon classique les signaux calculés en sortie de la voie somme sont utilisés pour la détection des cibles. La localisation des cibles est obtenue par écartométrie monopulse, à partir des voies somme et différence, par exemple en formant à un facteur d'échelle près :

$$ecartoaz(n,l) = signe(\arg(\Delta eraz(n,l)) * arctg(\sqrt{\frac{\Delta eraz(n,l)}{\Sigma eraz(n,l)}}) \qquad (26)$$

et

$$ecartoel(n,l) = signe(\arg(\Delta erel(n,l)) * arctg(\sqrt{\frac{\Delta erel(n,l)}{\Sigma erel(n,l)}}) \qquad (27)$$

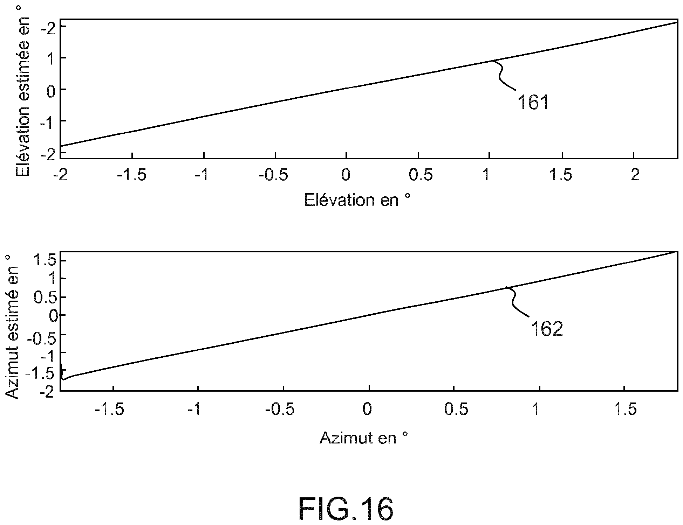

La figure 16 présente les droites d'écartométrie obtenues par ces traitements, toujours pour la configuration antennaire de la figure 9. La courbe du haut 161 représente la droite d'écartométrie en élévation. La courbe du bas 162 représente la droite d'écartométrie en azimut. Les angles d'azimut et d'élévation des cibles peuvent ainsi être mesurés à l'aide de ces droites. Les pentes de ces dernières sont suffisamment raides pour permettre des mesures précises. Par ces droites, on mesure également de façon indépendante l'angle d'élévation et l'angle d'azimut.

L'invention permet avantageusement d'améliorer la résolution et la précision de localisation angulaire de l'antenne pour une surface antennaire donnée grâce à la multiplication des diagrammes somme et différence réalisés à la fois en émission et en réception. L'invention comporte également les avantages mentionnés ci-après.

Les lobes secondaires et les lobes ambigus sont limités du fait de l'adjacence des sous réseaux et de leur distribution uniforme.

Le bilan de portée est optimisé par la surface rayonnante de l'antenne qui est maximale, et par le fait que l'émission et la réception sont séparées, ce qui réduit le couplage, donc le bruit en réception.

La formation de faisceaux réalisée en émission est limitée à quatre faisceaux obtenus par sommation et par différenciation ce qui ne nécessite pas de ressources de calcul importantes.

Les estimations angulaires obtenues en azimut et en élévation sont obtenues de façons indépendantes et ces estimations sont décorrélées entre elles. Les diagrammes d'antennes composites sont symétriques en azimut et en élévation, ce qui garantit une qualité de détection et de localisation homogène dans le domaine angulaire d'observation.

Il est possible de former des diagrammes champ large ou champ étroits simultanément, pour assurer par exemple une détection à courte portée et à longue portée.

Il est possible de régler le niveau des lobes secondaires en ajustant l'amplitude des signaux à l'émission ou à la réception sur les différents sous réseaux.

Il n'y a pas de dispositif de commutation dans l'antenne, ce qui est favorable au bilan de portée.

Enfin, le traitement est simple et facile à mettre en œuvre.

L'invention a été présentée pour des codages de l'onde émises, en fréquences et en phases, réalisés selon des lignes ou des colonnes, selon des parties gauche et droites, il est bien sûr possible de réaliser ces codages selon d'autres sous-ensembles de sous-réseaux d'émission et de réception dès lors où ceux-ci permettent de discriminer des parties d'antennes.

## Revendications

**1.** Radar à onde continue et à modulation de fréquence selon des rampes de fréquence, dite FMCW, comportant au moins une antenne réseau (10) composée de sous-réseaux d'émission et de sous-réseaux de réception, un système d'émission et de réception et des moyens de traitement, **caractérisé en ce que**, une formation de faisceaux monopulse deux plans en émission et en réception étant réalisée en divisant ladite antenne en quatre quadrants (1, 2, 3, 4) à l'émission et à la réception, ladite formation de faisceaux monopulse en émission étant obtenue par un double codage en fréquence (101, 102) et en phase (103, 104) :

- la répartition des sous-réseaux d'émission et des sous-réseaux de réception est symétrique à la fois par rapport à un axe vertical (5) et par rapport à un axe horizontal (6) ;
- au moins deux sous-réseaux d'émission (11, 11', 41, 41') symétriques par rapport audit axe vertical (5) sont éloignés de la plus grande distance possible ;
- au moins deux sous-réseaux d'émission (11, 11", 42, 42") symétriques par rapport audit axe horizontal (6) sont éloignés de la plus grande distance possible ;
- au moins deux sous-réseaux de réception (12, 12',43, 43') symétriques par rapport audit axe vertical (5) sont éloignés de la plus grande distance possible ;
- au moins deux sous-réseaux de réception (12, 12", 43, 43") symétriques par rapport audit axe horizontal (6) sont éloignés de la plus grande distance possible ;
- un premier codage (101, 102) de l'onde émise par lesdits sous-réseaux d'émission étant réalisé par décalage de fréquence desdites rampes (81, 82) entre les différents sous-réseaux d'émission ;
- un deuxième codage (103, 104) de l'onde émise par lesdits sous-réseaux d'émission étant réalisé par modulation de phase de rampe de fréquence à rampe de fréquence entre les différents sous-réseaux d'émission ;
- une référence d'oscillateur commune étant utilisée pour réaliser ledit premier codage (101, 102) et ledit deuxième codage (81, 82) de l'onde émise par lignes et par colonnes de desdits sous-réseaux ;

**2.** Radar selon la revendication 1, **caractérisé en ce que** dans ledit premier codage, une première moitié des sous-réseaux d'émission (7) est alimentée par une première forme d'onde FMCW et la deuxième moitié (8) est alimentée par la même forme d'onde décalée en fréquence, les deux moitiés étant symétriques par rapport audit axe vertical (5).

**3.** Radar selon la revendication 1, **caractérisé en ce que** dans ledit premier codage, une première moitié gauche des sous-réseaux d'émission (91) est alimentée par une première forme d'onde FMCW et la deuxième moitié gauche (92) est alimentée par la même forme d'onde décalée en fréquence, lesdites deux moitiés étant symétriques par rapport à l'intersection dudit axe vertical (5) et dudit axe horizontal (6).

**4.** Radar selon l'une quelconque des revendications précédentes, **caractérisé en ce que**, dans ledit deuxième codage, les ondes alimentant les différents sous-réseaux d'émission appartenant à une même ligne (1001, 1002, 1003), selon l'axe horizontal, sont codées par le même code de phase.

5. Radar selon la revendication 1, **caractérisé en ce que**, dans ledit premier codage, une première moitié des sous-réseaux d'émission est alimentée par une première forme d'onde FMCW et la deuxième moitié est alimentée par la même forme d'onde décalée en fréquence, les deux moitiés étant symétriques par rapport audit axe horizontal (6).

6. Radar selon l'une quelconque des revendications précédentes, **caractérisé en ce que**, dans ledit deuxième codage, les ondes alimentant les différents sous-réseaux d'émission appartenant à une même colonne, selon l'axe vertical, sont codées par le même code de phase.

7. Radar selon l'une quelconque des revendications précédentes, **caractérisé en ce que** ledit système d'émission et de réception comporte un premier générateur de forme d'onde ($VCO_A$) générant une première forme d'onde FMCW (81) et un second générateur de forme d'onde ($VCO_B$), synchrone et cohérent du premier, générant l'autre forme d'onde FMCW (82) décalée en fréquence.

8. Radar selon la revendication 7, **caractérisé en ce que** chacun desdits générateurs de forme d'onde ($VCO_A$, $VCO_B$) est utilisé à la fois pour l'émission (51) et pour la démodulation synchrone (114) des signaux en réception (52).

9. Radar selon la revendication 8, **caractérisé en ce que** l'écart de fréquence entre lesdits générateurs de forme d'onde (81, 82) est choisi pour que les fréquences de battement des signaux en réception démodulés par un même générateur de forme d'onde ($VCO_A$) occupent des bandes de fréquence disjointes (121, 122) selon que lesdits signaux en réception proviennent d'une émission issue dudit même générateur ($VCO_A$) ou de l'autre générateur ($VCO_B$).

10. Radar selon l'une quelconque des revendications précédentes, **caractérisé en ce que** les signaux en réception résultant des différents sous-réseaux d'émission sont séparés par filtrage (131, 132) et par corrélation en réception, respectivement selon leur bande de fréquence (121, 122) et selon leur code de modulation de phase.

11. Radar selon l'une quelconque des revendications précédentes, **caractérisé en ce qu'**une première formation de faisceau monopulse deux plans comprenant une voie somme et deux voies de réception est effectuée en émission par lesdits moyens de traitement, sur chaque voie de réception associée à un sous-réseau de réception, en utilisant les signaux provenant de tout ou partie des sous-réseaux d'émission.

12. Radar selon la revendication 11, **caractérisé en ce qu'**une seconde formation de faisceau monopulse deux plans comprenant une voie somme et deux voies différence est effectuée en réception par lesdits moyens de traitement, en associant tout ou partie des signaux reçus sur tout ou partie des voies de réception.

13. Radar selon les revendications 11 et 12, **caractérisé en ce que** la détection et la localisation angulaire de cibles sont effectuées à partir des signaux résultant du produit des faisceaux monopulse d'émission et des faisceaux monopulse de réception.

14. Radar selon l'une quelconque des revendications précédentes, **caractérisé en ce que** le code de modulation de phase appliqué est un code biphasé ayant la valeur 0 ou $\pi$.

15. Radar selon l'une quelconque des revendications précédentes, **caractérisé en ce que** le code de modulation de phase appliqué est un code de Hadamard.

16. Radar selon l'une quelconque des revendications précédentes, **caractérisé en ce que** ladite antenne comporte six sous-réseaux d'émission et huit sous-réseaux de réception, ledit système d'émission et de réception comportant deux circuit intégrés comportant chacun un générateur des forme d'onde (50, $VCO_A$, $VCO_B$), trois voies d'émission (511, 512, 513) et quatre voies de réception (521, 522, 523, 524), les trois sous-réseaux d'émission disposés d'un côté d'un desdits axes (5, 6) étant alimentés par les voies d'émission d'un même circuit intégrés, les trois autres sous-réseaux étant alimentés par les voies d'émission de l'autre circuit intégré.

17. Radar selon l'une quelconque des revendications précédentes, **caractérisé en ce qu'**il fonctionne en ondes millimétriques.

**18.** Radar selon l'une quelconque des revendications précédentes, **caractérisé en ce qu'**il est apte à équiper un véhicule automobile.

**Patentansprüche**

**1.** Radar mit stetiger Welle und Frequenzmodulation gemäß Frequenzrampen, genannt FMCW, umfassend mindestens eine Netzwerkantenne (10), gebildet aus Sende-Teilnetzwerken und Empfangs-Teilnetzwerken, einem Sende- und Empfangssystem und Verarbeitungsmitteln, **dadurch gekennzeichnet, dass** ein Formen von Monopulsstrahlen in zwei Ebenen im Sende- und im Empfangsbetrieb bewerkstelligt wird, indem die Antenne in vier Quadranten (1, 2, 3, 4) im Sende- und Empfangsbetrieb unterteilt wird, wobei das Formen von Monopulsstrahlen im Sendebetrieb durch eine doppelte Codierung in Bezug auf die Frequenz (101, 102) und die Phase (103, 104) erzielt wird:

- wobei die Verteilung der Sende-Teilnetzwerke und der Empfangs-Teilnetzwerke symmetrisch gleichermaßen in Bezug auf eine vertikale Achse (5) und in Bezug auf eine horizontale Achse (6) ist;
- wobei mindestens zwei Sende-Teilnetzwerke (11, 11', 41, 41'), welche symmetrisch in Bezug auf die vertikale Achse (5) sind, um den größtmöglichen Abstand entfernt sind;
- wobei mindestens zwei Sende-Teilnetzwerke (11, 11", 42, 42"), welche symmetrisch in Bezug auf die horizontale Achse (6) sind, um den größtmöglichen Abstand entfernt sind;
- wobei mindestens zwei Empfangs-Teilnetzwerke (12, 12', 43, 43'), welche symmetrisch in Bezug auf die vertikale Achse (5) sind, um den größtmöglichen Abstand entfernt sind;
- wobei mindestens zwei Empfangs-Teilnetzwerke (12, 12", 43, 43"), welche symmetrisch in Bezug auf die horizontale Achse (6) sind, um den größtmöglichen Abstand entfernt sind;
- wobei eine erste Codierung (101, 102) der durch die Sende-Teilnetzwerke ausgesendeten Welle durch Frequenzverschiebung der Rampen (81, 82) zwischen den unterschiedlichen Sende-Teilnetzwerken bewerkstelligt wird;
- wobei eine zweite Codierung (103, 104) der durch die Sende-Teilnetzwerke ausgesendeten Welle durch Phasenmodulation von einer Frequenzrampe zur nächsten Frequenzrampe zwischen den unterschiedlichen Sende-Teilnetzwerken bewerkstelligt wird;
- eine gemeinsame Oszillatorreferenz verwendet wird, um die erste Codierung (101, 102) und die zweite Codierung (81, 82) der ausgesendeten Welle nach Zeilen und Spalten der Teilnetzwerke zu bewerkstelligen.

**2.** Radar nach Anspruch 1, **dadurch gekennzeichnet, dass** in der ersten Codierung eine erste Hälfte der Sende-Teilnetzwerke (7) durch eine erste FMCW-Welle gespeist wird und die zweite Hälfte (8) durch dieselbe, frequenzversetzte Wellenform, gespeist wird, wobei die beiden Hälften symmetrisch in Bezug auf die vertikale Achse (5) sind.

**3.** Radar nach Anspruch 1, **dadurch gekennzeichnet, dass** in der ersten Codierung eine erste linke Hälfte der Sende-Teilnetzwerke (91) durch eine erste FMCW-Welle gespeist wird und die zweite linke Hälfte (92) durch dieselbe, frequenzversetzte Wellenform, gespeist wird, wobei die beiden Hälften symmetrisch in Bezug auf den Schnittpunkt der vertikalen Achse (5) und der horizontalen Achse (6) sind.

**4.** Radar nach einem der vorhergehenden Ansprüche, **dadurch gekennzeichnet, dass** in der zweiten Codierung, da die Wellen, welche die unterschiedlichen Sende-Teilnetzwerke speisen, einer selben Zeile (1001, 1002, 1003) entlang der horizontalen Achse angehören, sie anhand desselben Phasencodes codiert werden.

**5.** Radar nach Anspruch 1, **dadurch gekennzeichnet, dass** in der ersten Codierung eine erste Hälfte der Sende-Teilnetzwerke durch eine erste FMCW-Welle gespeist wird und die zweite Hälfte durch dieselbe, frequenzversetzte Wellenform, gespeist wird, wobei die beiden Hälften symmetrisch in Bezug auf die horizontale Achse (6) sind.

**6.** Radar nach einem der vorhergehenden Ansprüche, **dadurch gekennzeichnet, dass** in der zweiten Codierung, da die Wellen, welche die unterschiedlichen Sende-Teilnetzwerke speisen, einer selben Spalte entlang der vertikalen Achse angehören, sie anhand desselben Phasencodes codiert werden.

**7.** Radar nach einem der vorhergehenden Ansprüche, **dadurch gekennzeichnet, dass** das Sende- und Empfangssystem einen ersten Wellenformgenerator (VCO$_A$) umfasst, welche eine erste FMCW-Wellenform (81) erzeugt, und einen zweiten Wellenformgenerator (VCO$_B$), synchron und kohärent mit dem ersten, welcher die andere FMCW-Wellenform (82) erzeugt, welche in Bezug auf die Frequenz verschoben ist.

8. Radar nach Anspruch 7, **dadurch gekennzeichnet, dass** jeder der Wellenformgeneratorenen (VCO$_A$, VCO$_B$) gleichermaßen für die Sendung (51) und für die synchrone Demodulation (114) der Signale im Empfangsbetrieb (52) verwendet wird.

9. Radar nach Anspruch 8, **dadurch gekennzeichnet, dass** die Frequenzabweichung zwischen den Wellenformgeneratoren (81, 82) so gewählt ist, dass die Überlagerungsfrequenzen der Signale im Empfangsbetrieb, welche durch einen selben Wellenformgenerator (VCO$_A$) demoduliert werden, getrennte Frequenzbänder (121, 122) belegen, je nachdem, ob die Signale im Empfangsbetrieb einer Sendung entstammen, welche aus demselben Generator (VCO$_A$) oder dem anderen Generator (VCO$_B$) stammt.

10. Radar nach einem der vorhergehenden Ansprüche, **dadurch gekennzeichnet, dass** die Signale im Empfangsbetrieb, welche aus den unterschiedlichen Sende-Teilnetzwerken resultieren, durch Filterung (131, 132) und durch Korrelation im Empfangsbetrieb getrennt werden, jeweils entsprechend ihrem Frequenzband (121, 122) und entsprechend ihrem Phasenmodulations-Code.

11. Radar nach einem der vorhergehenden Ansprüche, **dadurch gekennzeichnet, dass** eine erste Monopuls-Strahlformung in zwei Ebenen, welche einen Summenkanal und zwei Empfangskanäle umfasst, im Sendebetrieb durch die Verarbeitungsmittel bewerkstelligt wird, auf jedem Empfangskanal, welcher einem Empfangs-Teilnetzwerk zugeordnet ist, unter Verwendung der Signale, welche aus allen oder einem Teil der Sende-Teilnetzwerke entstammen.

12. Radar nach Anspruch 11, **dadurch gekennzeichnet, dass** eine zweite Monopuls-Strahlformung in zwei Ebenen, welche einen Summenkanal und zwei Empfangskanäle umfasst, im Empfangsbetrieb durch die Verarbeitungsmittel bewerkstelligt wird, indem alle oder ein Teil der aus allen oder einem Teil der Empfangskanäle empfangene Signale zugeordnet werden.

13. Radar nach einem der Ansprüche 11 und 12, **dadurch gekennzeichnet, dass** die Erkennung und die Winkellokalisierung von Zielen anhand von Signalen bewerkstelligt werden, welche aus dem Produkt der Monopulsstrahlen im Sendebetrieb und der Monopulsstrahlen im Empfangsbetrieb resultieren.

14. Radar nach einem der vorhergehenden Ansprüche, **dadurch gekennzeichnet, dass** der angewandte Phasenmodulations-Code ein zweiphasiger Code ist, welcher den Wert 0 oder $\Pi$ aufweist.

15. Radar nach einem der vorhergehenden Ansprüche, **dadurch gekennzeichnet, dass** der angewandte Phasenmodulations-Code ein Hadamard-Code ist.

16. Radar nach einem der vorhergehenden Ansprüche, **dadurch gekennzeichnet, dass** die Antenne sechs Sende-Teilnetzwerke und acht Empfangs-Teilnetzwerke umfasst, wobei das Sende- und Empfangssystem zwei integrierte Schaltkreise umfasst, welche jeweils einen Wellenformgenerator (50, VCO$_A$, VCO$_B$), drei Sendekanäle (511, 512, 513) und vier Empfangskanäle (521, 522, 523, 524) umfassen, wobei die drei Sende-Teilnetzwerke, welche auf einer Seite der Achsen (5, 6) angeordnet sind, durch die Sendekanäle eines selben integrierten Schaltkreises gespeist werden, wobei die drei anderen Teilnetzwerke durch die Sendekanäle des anderen integrierten Schaltkreises gespeist werden.

17. Radar nach einem der vorhergehenden Ansprüche, **dadurch gekennzeichnet, dass** er mit Millimeterwellen arbeitet.

18. Radar nach einem der vorhergehenden Ansprüche, **dadurch gekennzeichnet, dass** er in der Lage ist, ein Kraftfahrzeug auszurüsten.

## Claims

1. Frequency-ramp-based frequency-modulation continuous-wave radar, termed FMCW, having at least one array antenna (10) composed of transmit sub-arrays and of receive sub-arrays, a transmit and receive system and processing means, **characterized in that**, a transmit and receive two-plane monopulse beamforming being produced by dividing said antenna into four quadrants (1, 2, 3, 4) on transmission and on reception and said transmit monopulse beamforming being obtained through a dual coding in frequency (101, 102) and in phase (103, 104):

    - the distribution of the transmit sub-arrays and of the receive sub-arrays is symmetric both with respect to a vertical axis (5) and with respect to a horizontal axis (6);
- at least two transmit sub-arrays (11, 11', 41, 41') symmetric with respect to said vertical axis (5) are the largest possible distance apart;
- at least two transmit sub-arrays (11, 11", 42, 42") symmetric with respect to said horizontal axis (6) are the largest possible distance apart;
- at least two receive sub-arrays (12, 12', 43, 43') symmetric with respect to said vertical axis (5) are the largest possible distance apart;
- at least two receive sub-arrays (12, 12", 43, 43") symmetric with respect to said horizontal axis (6) are the largest possible distance apart;
- a first coding (101, 102) of the wave transmitted by said transmit sub-arrays being carried out by frequency shifting of said ramps (81, 82) between the various transmit sub-arrays;
- a second coding (103, 104) of the wave transmitted by said transmit sub-arrays being carried out by phase modulation from frequency ramp to frequency ramp between the various transmit sub-arrays;
- a common oscillator reference being used to carry out said first coding (101, 102) and said second coding (81, 82) of the wave transmitted by rows and by columns of said sub-arrays.

2.  Radar according to claim 1, **characterized in that** in said first coding, a first half of the transmit sub-arrays (7) is fed by a first FMCW waveform and the second half (8) is fed by the same waveform shifted in frequency, the two halves being symmetric with respect to said vertical axis (5).

3.  Radar according to claim 1, **characterized in that** in said first coding, a first left half of the transmit sub-arrays (91) is fed by a first FMCW waveform and the second left half (92) is fed by the same waveform shifted in frequency, said two halves being symmetric with respect to the intersection of said vertical axis (5) and of said horizontal axis (6).

4.  Radar according to any one of the preceding claims, **characterized in that**, in said second coding, the waves feeding the various transmit sub-arrays belonging to one and the same row (1001, 1002, 1003), along the horizontal axis, are coded by the same phase code.

5.  Radar according to claim 1, **characterized in that**, in said first coding, a first half of the transmit sub-arrays is fed by a first FMCW waveform and the second half is fed by the same waveform shifted in frequency, the two halves being symmetric with respect to said horizontal axis (6).

6.  Radar according to any one of the preceding claims, **characterized in that**, in said second coding, the waves feeding the various transmit sub-arrays belonging to one and the same column, along the vertical axis, are coded by the same phase code.

7.  Radar according to any one of the preceding claims, **characterized in that** said transmit and receive system has a first waveform generator ($VCO_A$) generating a first FMCW waveform (81) and a second waveform generator ($VCO_B$), synchronous and coherent with the first, generating the other FMCW waveform (82) shifted in frequency.

8.  Radar according to claim 7, **characterized in that** each of said waveform generators ($VCO_A$, $VCO_B$) is used both for transmission (51) and for synchronous demodulation (114) of the signals in reception (52).

9.  Radar according to claim 8, **characterized in that** the frequency discrepancy between said waveform generators (81, 82) is chosen so that the beat frequencies of the signals in reception demodulated by one and the same waveform generator ($VCO_A$) occupy disjoint frequency bands (121, 122) depending on whether said signals in reception originate from a transmission arising from said same generator ($VCO_A$) or from the other generator ($VCO_B$).

10. Radar according to any one of the preceding claims, **characterized in that** the signals in reception resulting from the various transmit sub-arrays are separated by filtering (131, 132) and by correlation in reception, respectively according to their frequency band (121, 122) and according to their phase modulation code.

11. Radar according to any one of the preceding claims, **characterized in that** a first two-plane monopulse beamforming comprising a sum channel and two receive channels is performed in transmission by said processing means, on each receive channel associated with a receive sub-array, by using the signals originating from all or some of the transmit sub-arrays.

12. Radar according to claim 11, **characterized in that** a second two-plane monopulse beamforming comprising a sum channel and two difference channels is performed in reception by said processing means, by associating all or some of the signals received on all or some of the receive channels.

13. Radar according to claims 11 and 12, **characterized in that** the detection and the angular location of targets are performed based on the signals resulting from the product of the transmit monopulse beams and of the receive monopulse beams.

14. Radar according to any one of the preceding claims, **characterized in that** the phase modulation code applied is a two-phase code having the value 0 or $\pi$.

15. Radar according to any one of the preceding claims, **characterized in that** the phase modulation code applied is a Hadamard code.

16. Radar according to any one of the preceding claims, **characterized in that** said antenna has six transmit sub-arrays and eight receive sub-arrays, said transmit and receive system having two integrated circuits, each having a generator of the waveform (50, $VCO_A$, $VCO_B$), three transmit channels (511, 512, 513) and four receive channels (521, 522, 523, 524), the three transmit sub-arrays disposed on one side of one of said axes (5, 6) being fed by the transmit channels of one and the same integrated circuit, the other three sub-arrays being fed by the transmit channels of the other integrated circuit.

17. Radar according to any one of the preceding claims, **characterized in that** it operates in millimetric waves.

18. Radar according to any one of the preceding claims, **characterized in that** it is able to equip an automotive vehicle.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **MATTHIAS STEINHAUER et al.** Millimeter-wave Radar Sensor Based on a Tranceiver Array for Automotive Applications. *IEEE Transactions on Microwaves Theory and Techniques,* Février 2008, vol. 56 (2
- Low sidelobes ADS-based arrays for FMCW radar. **ROCCA P et al.** ANTENNAS AND PROPAGATION (APSURSI), 2011 IEEEE INTERNATIONAL SYMPOSIUM ON. IEEE, 03 Juillet 2011, 2004-2007

- **MATTHIAS STEINHAUER.** Millimeter-Wave-Radar Sensor Based on a Tranceiver Array for Automotive Applications. *IEEE Transactions on Microwave Theory and Techniques,* Février 2008, vol. 56, 262-269